# EUROPEAN PATENT SPECIFICATION

(11) **EP 1 667 154 B1**
(45) Date of publication and mention of the grant of the patent: **28.05.2008**
(21) Application number: 05019909.0
(22) Date of filing: 13.09.2005
(51) Int. Cl.: G11B 27/00

(54) **Background music and slide show processing with visual effects based on the features of the selected music.**
Hintergrundmusik und Dia-Show Verarbeitung mit visuellen Effekten, die auf Eigenschaften der ausgewaehlten Musik beruhen.
Procede pour diaporama avec musique d'ambiance et effets visuels basés sur les characteristiques de la musique selectionnee.

(30) Priority: 14.09.2004 JP 2004267242
(43) Date of publication of application: 07.06.2006
(73) Proprietor: Sony Corporation, Tokyo (JP)
(72) Inventor: Nishizawa, Kazuto, Shinagawa-ku Tokyo (JP); Yoshioka, Keiichi, Shinagawa-ku Tokyo (JP); Sugawara, Taku, Shinagawa-ku Tokyo (JP); Fukuda, Yohei, Shinagawa-ku Tokyo (JP); Inoue, Masayuki, Shinagawa-ku Tokyo (JP); Mori, Masakazu, Shinagawa-ku Tokyo (JP); Sakai, Shinji, Shinagawa-ku Tokyo (JP)
(74) Representative: Melzer, Wolfgang

(56) References cited:
- EP-A- 1 246 081
- WO-A-03/085968
- DE-A1- 3 419 676
- US-A1- 2004 100 487
- "P506iC" [Online] 8 June 2004 (2004-06-08), PANASONIC , XP002370725 Retrieved from the Internet: URL:http://panasonic.jp/mobile/p506ic/phot o/index.html> [retrieved on 2006-03-06] * figure 2 *
- PATENT ABSTRACTS OF JAPAN vol. 1999, no. 14, 22 December 1999 (1999-12-22) & JP 11 261947 A (NIPPON TELEGR & TELEPH CORP <NTT>), 24 September 1999 (1999-09-24)

## Description

### CROSS REFERENCES TO RELATED APPLICATIONS

The present invention contains subject matter related to Japanese Patent Application JP 2004-267242 filed in the Japanese Patent Office on September 14, 2004, the entire contents of which are incorporated herein by reference.

### BACKGROUND OF THE INVENTION

### 1. Field of the Invention

The present invention relates to an information processing apparatus and method, and a program therefor and, more particularly, to an information processing apparatus and method capable of easily and rapidly creating content with back ground music (BGM), the content including still images to which an effect is applied and which can be sequentially displayed, and a program therefor.

### 2. Description of the Related Art

Most of various apparatuses, such as personal computers, capable of processing still images captured by a digital camera include a function for automatically sequentially displaying still images every predetermined time, e.g., every second, i.e., a so-called slideshow function. In some of the above apparatuses, a user can select a favorite music tracK, serving as BGM (hereinafter, also referred to as a BGM track) in viewing a slideshow.

The user can view still images, which are automatically sequentially displayed, while listening the favorite music track without performing the operation of displaying the still images one by one.

Another slideshow function of sequentially displaying imported still images (captured still images) with various effects is provided for an apparatus (DoCoMo mobile phone, MOVA P506iC, coming with "Photococktail ", http://panasonic.jp/mobile/p506ic/photo/index.html).

According to the above apparatus, the user selects still images to be played back, the kinds of effects, and a music track used as BGM, thus creating content with BGM such that the still images with the effects are automatically sequentially displayed.

Regarding the slideshow function of the above-mentioned apparatus, disadvantageously, the user has to perform three operations, i.e., the first operation of selecting still images to be played back, the second operation of selecting the kinds of effects, and the third operation of selecting a BGM track. Generally, the reason why the slideshow function is used is that switching still images to be displayed one by one is complicated and, moreover, the user wants to enjoy still images. The easier the operation is, the more preferable the slideshow function is.

Therefore, in creating content with BGM on the basis of the same still image such that still images with various effects can be sequentially displayed, it is preferable to achieve the creation with less number of operations.

Since the user selects an effect and a BGM track, in some cases, the feeling of the BGM track does not match a feeling expressed by the effect. Unfortunately, content including a slideshow with an uncomfortable feeling is created.

From JP 11 261947 it is known a video editing method in which representative pictures selected from input video data are displayed, wherein an imitation word is inserted in a representative picture and a BGM track corresponding to the imitation word is selected.

Further, there is known from US 2004/100487 an apparatus for generating a short film using input still pictures. In this apparatus, picture features are extracted from preferential still pictures that are selected from the input still pictures by the user, wherein BGM and kinds of effects to be applied to the input still pictures are automatically selected according to those features.

### SUMMARY OF THE INVENTION

It is an object of the present invention to provide an information processing apparatus, an information processing method and a computer program product which permit an easy and rapid creation of content with BGM, the content including still images to which an effect is applied and which can be sequentially displayed.

This object is achieved by a reproducing apparatus and a reproducing method for an optical medium according to the enclosed independent claims. Advantageous features of the present invention are defined in the corresponding subclaims.

According to the present invention, attribute information units added upon shooting to at least one still image, serving as a playback target, are analyzed and a predetermined attribute information unit to be displayed together with the still image is selected. A music track selected by a user is played back as BGM. At least one effect related to the selected music track is applied and the still image and text indicating the selected predetermined attribute information unit with the effect are displayed on the same screen. related to the music track selected by the user, and displays the still image and text indicating the selected predetermined attribute information unit with the effect on the same screen.

The selection unit may select related information, which is obtained on the basis of the attribute information units added to the still image to be played back, as the predetermined attribute information unit to be displayed together with the still image.

The selection unit may obtain the related information from a predetermined server connected via a network, an internal storage medium, or a removable storage medium.

The playback unit may apply an effect related to the music track selected by the user to the still image to continuously display a plurality of still images.

According to another embodiment of the present invention, there is provided an information processing method including the steps of: analyzing attribute information units, which are added upon shooting to at least one still image to be played back, and selecting a predetermined attribute information unit to be displayed together with the still image; and playing back a music track selected by a user, applying at least one effect related to the music track selected by the user, and displaying the still image and text indicating the selected predetermined attribute information unit with the effect on the same screen.

According to still another embodiment of the present invention, there is provided a program allowing a computer to execute a process including the steps of: analyzing attribute information units, which are added upon shooting to at least one still image to be played back, and selecting a predetermined attribute information unit to be displayed together with the still image; and playing back a music track selected by a user, applying at least one effect related to the music track selected by the user, and displaying the still image and text indicating the selected predetermined attribute information unit with the effect on the same screen.

According to the present invention, in the information processing apparatus and method and the program therefor, attribute information units added upon shooting to at least one still image, serving as a playback target, are analyzed and a predetermined attribute information unit to be displayed together with the still image is selected. A music track selected by a user is played back as BGM. At least one effect related to the selected music track is applied and the still image and text indicating the selected predetermined attribute information unit with the effect are displayed on the same screen.

According to the present invention, content with BGM in which still images with an effect are sequentially displayed can be easily and rapidly created.

### BRIEF DESCRIPTION OF THE DRAWINGS

Fig. 1 is a diagram showing an external view of an information processing apparatus according to an embodiment of the present invention and that of a television.
Fig. 2 shows an example of a play list;
Fig. 3 shows an example of a template;
Fig. 4 is a block diagram of the structure of the information processing apparatus;
Fig. 5 is a block diagram of the functional structure of the information processing apparatus;
Fig. 6 is a block diagram of the structure of a playback unit in Fig. 5;
Fig. 7 shows an example of a menu screen;
Fig. 8 shows another example of the menu screen;
Fig. 9 is a flowchart of a play list creating process by the information processing apparatus;
Fig. 10 is a flowchart following Fig. 9 to explain the play list creating process;
Fig. 11 is a flowchart following Fig. 10 to explain the play list creating process;
Fig. 12 shows an example of a screen displayed in step S1 in Fig. 9;
Fig. 13 shows an example of a screen displayed in step S4 in Fig. 9;
Fig. 14 shows an example of a screen displayed in step S5 in Fig. 9;
Fig. 15 shows an example of a screen displayed in step S7 in Fig. 9;
Fig. 16 shows an example of a screen displayed in step S8 in Fig. 9;
Fig. 17 shows an example of a screen displayed in step S11 in Fig. 9;
Fig. 18 shows an example of a screen displayed in step S12 in Fig. 9;
Fig. 19 shows an example of a screen displayed in step S13 in Fig. 9;
Fig. 20 shows an example of a screen displayed in step S15 in Fig. 10;
Fig. 21 shows an example of a screen displayed in step S19 in Fig. 10;
Fig. 22 shows an example of a screen displayed in step S21 in Fig. 10;
Fig. 23 shows an example of a screen displayed in step S24 in Fig. 10;
Fig. 24 shows another example of the screen displayed in step S24 in Fig. 10;
Fig. 25 shows an example of a screen displayed in step S27 in Fig. 10;
Fig. 26 shows another example of the menu screen;
Fig. 27 shows an example of a screen displayed in step S31 in Fig. 11;
Fig. 28 shows an example of a screen displayed in step S34 in Fig. 11;
Fig. 29 shows an example of a screen displayed in step S35 in Fig. 11;
Fig. 30 shows an example of a screen displayed in step S40 in Fig. 11;
Fig. 31 shows another example of the menu screen;
Fig. 32 is a flowchart explaining play list creation in step S14 in Fig. 9;
Fig. 33 is a flowchart explaining preview playback in step S17 in Fig. 10;
Figs. 34A and 34B show examples of a preview screen;
Fig. 35 is a flowchart explaining slideshow content creation in step S39 in Fig. 11;
Fig. 36 shows an example of a screen which is displayed during slideshow content creation;
Fig. 37 is a flowchart of a play list playback process by the information processing apparatus;
Fig. 38 is a flowchart of a slideshow content playback process by the information processing apparatus;
Fig. 39 shows an example of a slideshow screen;
Fig. 40 shows another example of the slideshow screen;
Fig. 41 shows still another example of the slideshow screen;
Fig. 42 is a block diagram of another structure of the playback unit in Fig. 5;
Fig. 43 is a flowchart of another play list playback process by the information processing apparatus; and
Fig. 44 is a flowchart of further another play list playback process by the information processing apparatus.

### DESCRIPTION OF THE PREFERRED EMBODIMENTS

Before describing an embodiment of the present invention, the correspondence between aspects of the present invention and embodiments of the present invention is discussed below. This description is intended to assure that the embodiments supporting the claimed invention are described in this specification. Thus, even if an embodiment in the following embodiments is not described as relating to a certain aspect of the present invention, that does not necessarily mean that the embodiment does not relate to that aspect of the present invention. Conversely, even if an embodiment is described herein as relating to a certain aspect of the present invention, that does not necessarily mean that the embodiment does not relate to other aspects of the present invention.

Furthermore, this description should not be construed as all the aspects of the invention disclosed in the specification. That is, the description does not deny the existence of aspects of the present invention that are described in the embodiments but not claimed in the invention of this application, i.e., the existence of aspects of the present invention that in future may be claimed by a divisional application, or that may be additionally claimed through amendments.

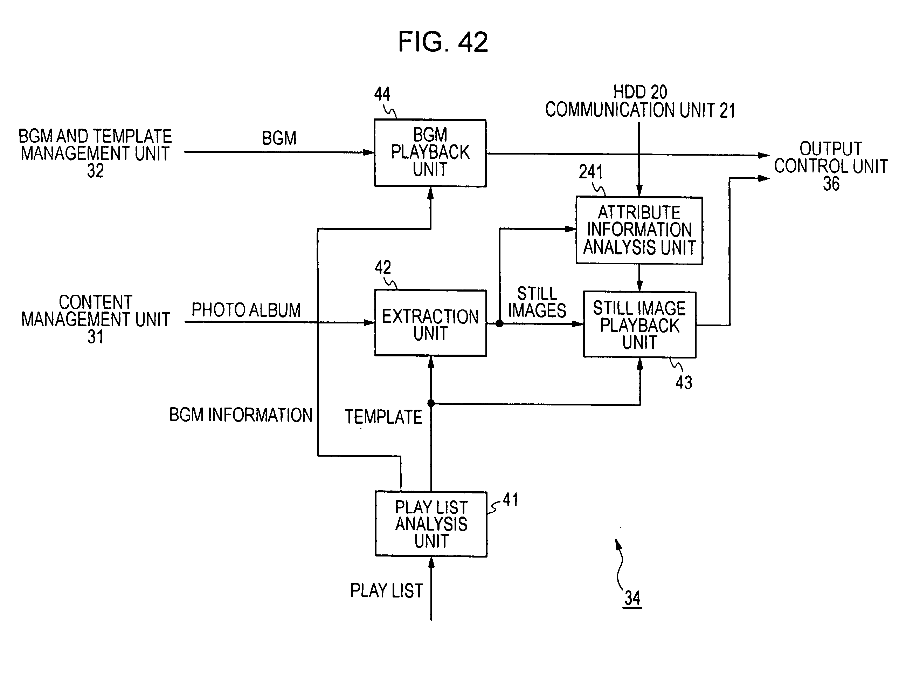

According to an embodiment of the present invention, an information processing apparatus includes the following elements. A selection unit (e.g., an attribute information analysis unit 241 in Fig. 42) analyzes attribute information units, which are added upon shooting to at least one still image to be played back, and selects a predetermined attribute information unit to be displayed together with the still image. A playback unit (e.g., a still image playback unit 43 in Fig. 42) plays back a music track selected by a user, applies at least one effect related to the music track selected by the user, and displays the still image and text indicating the selected predetermined attribute information unit with the effect on the same screen.

According to this embodiment of the present invention, the selection unit selects related information (e.g., the name of a place, serving as a shooting site, the place name being obtained on the basis of latitude and longitude information), which is obtained on the basis of the attribute information units added to the still image to be played back, as the predetermined attribute information unit to be displayed together with the still image.

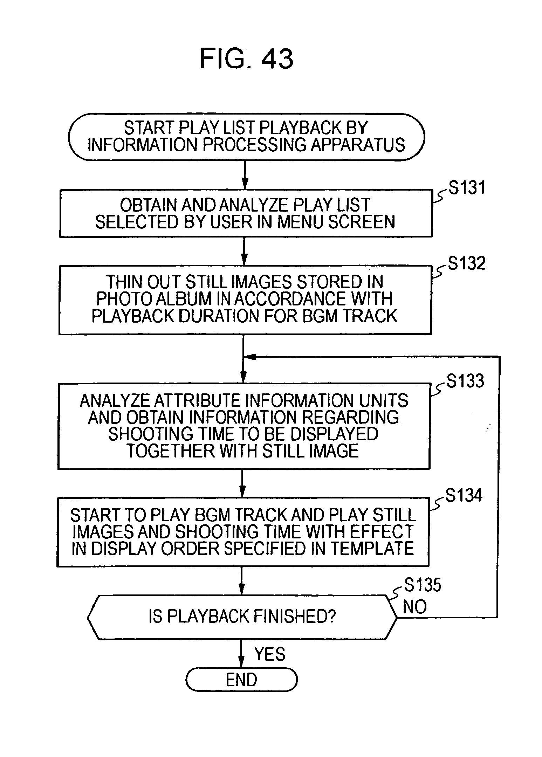

According to another embodiment of the present invention, an information processing method includes: a step (e.g., step S133 in Fig. 43) of analyzing attribute information units, which are added upon shooting to at least one still image to be played back, and selecting a predetermined attribute information unit to be displayed together with the still image; and a step (e.g., step S134 in Fig. 43) of playing back a music track selected by a user as BGM, applying at least one effect related to the music track selected by the user, and displaying the still image and text indicating the selected predetermined attribute information unit with the effect on the same screen.

According to still another embodiment of the present invention, a program allows a computer to execute the same steps as those of the above-mentioned information processing method.

Embodiments of the present invention will now be described with reference to the drawings.

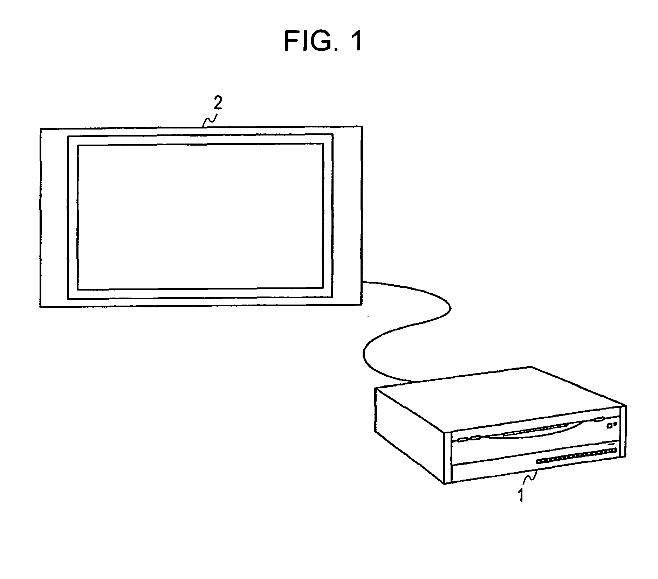

Fig. 1 is a diagram showing an external view of an information processing apparatus 1 to which the present invention is applied and that of a television (hereinafter, referred to as a TV) 2 connected to the information processing apparatus 1 via a cable.

The information processing apparatus 1 has a function of importing a captured still image from a digital camera via a memory card or a universal serial bus (USB) cable, storing the image in an internal hard disk drive (HDD), and displaying the still image on the TV 2. According to the information processing apparatus 1, a slideshow is performed, i.e., still images with various effects are sequentially displayed automatically (i.e., without the operation by a user) while a music track selected by the user is being played back as BGM.

The user makes various selections according to a wizard displayed on the TV 2 to create content, serving as a slideshow with BGM, in which still images with various effects are automatically sequentially displayed while a selected music track is being played back as BGM (hereinafter, referred to as slideshow content as appropriate).

In other words, principally, the user performs two operations, i.e., the first operation of selecting a photo album (i.e., a folder storing a still image file) including at least one still image, which the user wants to play back as a slideshow, and the second operation of selecting a music track used as BGM, thus creating slideshow content (as will be described below, actually, a "play list").

The information processing apparatus 1 previously stores a predetermined number of music tracks which can be used as BGM in the internal HDD. Each music track is related to an effect expressing a feeling that matches the feeling of the music track. The details of the effect are suited to the feeling of the music track which is determined depending on the tempo and genre of the music track.

Accordingly, in creating slideshow content, when the user selects a favorite music track as BGM, the user can select an effect suited to the feeling of the music track.

In addition, the user does not need to select still images to be played back one by one. When the user selects a photo album, all of still images stored in the photo album can be selected as the still images to be played back. As will be described in detail hereinafter, e.g., if the selected photo album includes many still images and playback duration necessary to play back all of the still images is longer than that necessary to play back the music track once, the following operation is automatically performed in the information processing apparatus 1: The still images stored in the photo album are thinned out so that the playback duration for the still images is substantially equivalent to that for the music track, thus controlling the number of still images to be played back.

Consequently, the user can simply select a photo album including still images which the user wants to play back without being concerned for the number of still images stored in one photo album or playback duration for a music track used as BGM.

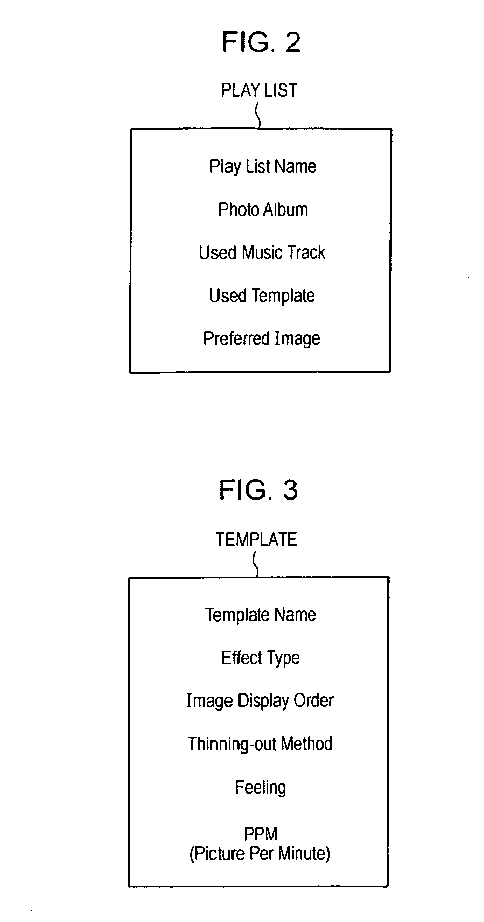

In the information processing apparatus 1, a play list is created as shown in Fig. 2 depending on the above-mentioned selections (regarding a photo album and a BGM track) by the user.

When the user selects a certain play list, a photo album and a music track as BGM, which are related to the play list, are read out. Still images stored in the photo album are played back according to a playback procedure defined by the play list. Simultaneously, the music track is also played back as BGM. As mentioned above, each play list is information for defining a procedure for playing back still images to create slideshow content.

The description of a play list will now be explained.

Referring to Fig. 2, a play list includes, e.g., "Play List Name", "Photo Album", "Used Music Track", "Used Template", and "Preferred Image".

"Play List Name" is the title of a play list and is determined by the user as necessary.

"Photo Album" is information that specifies a photo album storing still images to be played back. When the user selects a play list, a photo album specified by "Photo Album" in the selected play list is read from the HDD. Still images stored in the photo album are played back (displayed).

"Used Music Track" is information that specifies a music track used as BGM. When the user selects a play list, a music track specified by "Used Music Track" in the selected play list is read from the HDD. The music track is played back as BGM.

"Used Template" is related to a music track specified by "Used Music Track". "Used Template" is information (e.g., "Template Name" in Fig. 3) that specifies a template describing the details of an effect and the like. When the user selects a play list, a template specified by "Used Template" in the selected play list is read from the HDD. The effect described in the template is applied to the corresponding still images to be played back. The template will be described below with reference to Fig. 3.

"Preferred Image" is information that specifies a still image to be preferentially displayed among still images stored in a photo album specified by "Photo Album". As mentioned above, when many still images are stored in the photo album, some of the images are thinned out in consideration of playback duration for the corresponding BGM track. The still image specified by "Preferred Image" is not to be thinned out. The specified still image has higher priority than the other still images, i.e., the specified still image is preferentially selected as one of still images to be played back. The information processing apparatus 1 can automatically specify "Preferred Image". Alternatively, the user can specify "Preferred Image".

Fig. 3 is a diagram showing an example of the description of a template.

As shown in Fig. 3, a template includes, e.g., "Template Name", "Effect Type", "Image Display Order", "Thinning Method", "Feeling", and "Picture Per Minute (PPM)".

"Template Name" indicates the title of a template.

"Effect Type" is information that specifies the type (details) of an effect to be applied to at least one still image, serving as a playback target. A plurality of sub-effects are prepared. For example, a sub-effect represents which part of one still image is displayed, another sub-effect represents where is the corresponding still image displayed on the screen, the other sub-effect represents how large is the still image displayed, and the other sub-effect represents in what direction is the still image shifted. Some sub-effects are combined in accordance with the tempo of a music track related to the template, thus determining the details of one effect. "Effect Type" specifies the combination of sub-effects.

"Image Display Order" is information that specifies the display order of still images stored in a photo album specified by "Photo Album" in a play list. "Image Display Order" specifies any display order, e.g., random order, time series order (order of shooting time which is added as attribute information to each still image), or sequential order (order of storage in the corresponding folder).

"Thinning-out Method" is information that specifies how to thin out still images stored in a photo album. According to "Thinning-out Method", playback duration for the still images is controlled so as to be substantially equivalent to playback duration for the corresponding music track as BGM. The user can switch between the ON and OFF states of the thinning-out mode. When the thinning-out mode is in the OFF state (i.e., still images are not thinned out), all of still images stored in a photo album specified by "Photo Album" in a play list are to be played back.

"Feeling" is information that represents a feeling expressed by still images played back according to the corresponding template.

"PPM" is information that specifies the number of still images played back (displayed) per minute. In the information processing apparatus 1, still images, serving as playback targets, are played back at a rate specified by "PPM".

A process by the information processing apparatus 1, e.g., a process of playing back still images on the basis of a play list and a template will be described hereinafter.

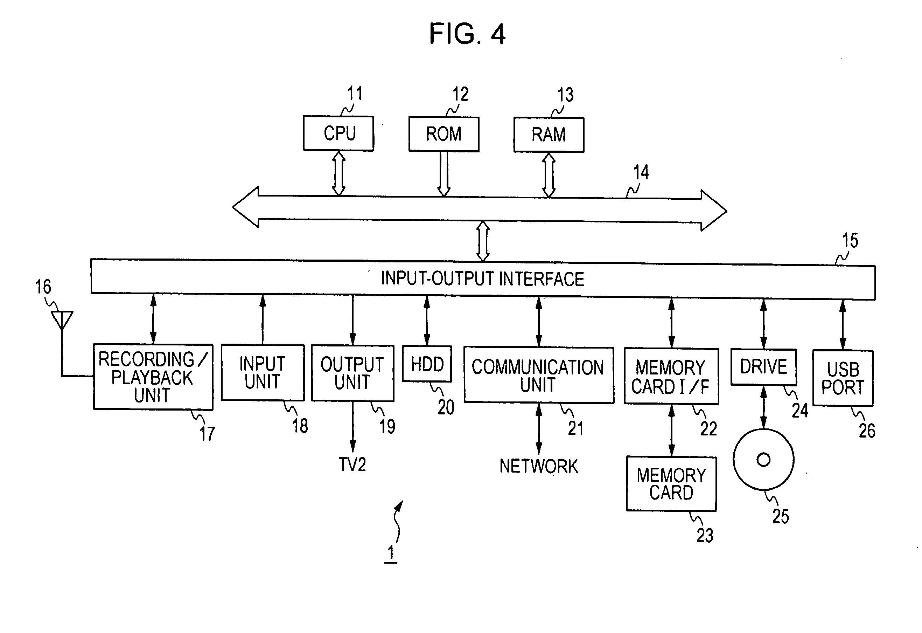

Fig. 4 is a block diagram of the structure of the information processing apparatus 1 in Fig. 1.

A central processing unit (CPU) 11 executes various processes according to a program stored in a read only memory (ROM) 12 or a program loaded from an HDD 20 to a random access memory (RAM) 13. The RAM 13 stores data necessary for the CPU 11 to execute the various processes as appropriate.

The CPU 11, the ROM 12, and the RAM 13 are connected via a bus 14. The bus 14 is connected to an input-output interface 15.

The input-output interface 15 is connected to a recording/playback unit 17, an input unit 18, an output unit 19, the HDD 20, a communication unit 21, a memory card interface (I/F) 22, a drive 24, and a USB port 26.

The recording/playback unit 17 compresses television (TV) program data obtained from signals supplied from an antenna 16 according to, e.g., the Moving Picture Experts Group phase 2 (MPEG-2) standard and supplies the compressed data (video content) to the HDD 20 via the input-output interface 15 to store the data in the HDD 20. In addition, the recording/playback unit 17 decompresses video content stored in the HDD 20 to obtain image data of a TV program. The output unit 19 outputs the decompressed data to the TV 2. In other words, the information processing apparatus 1 has a function of recording a TV program and playing back the program.

The input unit 18 includes, e.g., an infrared photo detector. The input unit 18 receives a signal from a remote controller (not shown) and outputs information regarding the description of the operation by a user to the CPU 11.

The output unit 19 converts digital image data supplied through the input-output interface 15 into analog image signals and outputs the image signals to the TV 2 via a cable. In addition, the output unit 19 receives image data, which is obtained by playing back still images according to a play list, and image data of video content played back by the recording/playback unit 17. The output unit 19 converts digital audio data supplied through the input-output interface 15 into analog signals and outputs the signals to the TV 2.

The HDD 20 stores video content supplied from the recording/playback unit 17, still images imported from a memory card 23 through the memory card I/F 22, still images imported from a digital camera via the USB port 26 and a USB cable, and audio data (audio content), which is supplied from an optical disc 25 through the drive 24 and is compressed according to the MPEG Audio Layer-3 (MP3) standard.

In addition, the HDD 20 also stores a play list created according to selections by the user, audio data regarding a music track used as BGM, a template related to the BGM track, and slideshow content.

The communication unit 21 performs communication processing over a network.

The memory card I/F 22 reads data stored in the memory card 23 inserted in a memory card slot in the casing of the information processing apparatus 1 and allows the HDD 20 to store the read data. For example, data regarding still images is imported from the memory card 23 to the information processing apparatus 1.

The drive 24 drives the inserted optical disc 25, reads data stored in the optical disc 25, and writes data to the optical disc 25. The optical disc 25 includes a compact disk (CD) or a digital versatile disc (DVD). Data, such as still images, audio content, or video content, is imported from the optical disc 25 to the information processing apparatus 1. The drive 24 writes created slideshow content to the optical disc 25 as appropriate.

The information processing apparatus 1 also has functions for a game console. Images of a game (program) read from the optical disc 25 through the drive 24 are supplied to the output unit 19 via the input-output interface 15 and are further output to the TV 2.

The USB port 26 communicates with an external device, such as a digital camera, via the USB cable. Still images imported through the USB port 26 are stored in the HDD 20.

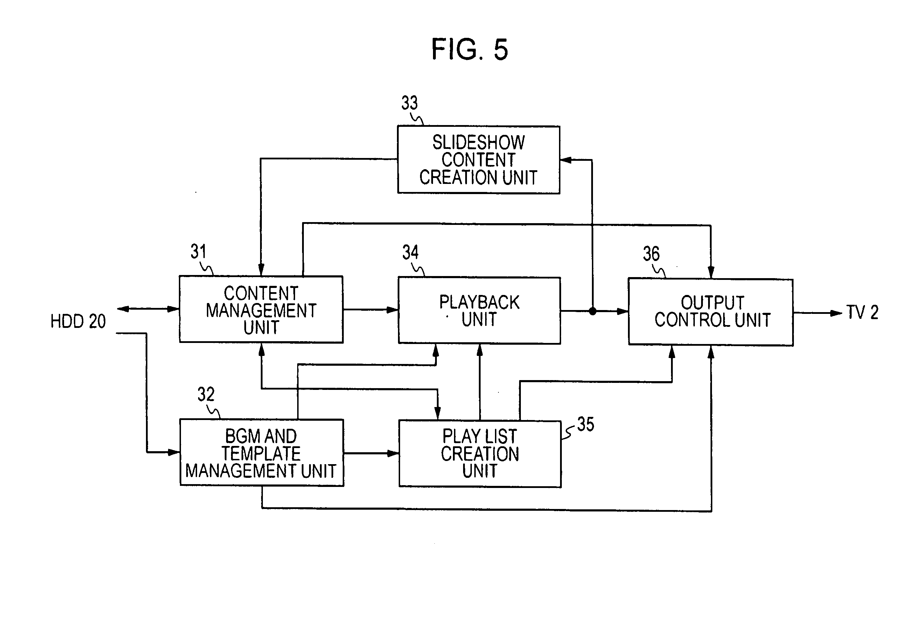

Fig. 5 is a block diagram of the functional structure of the information processing apparatus 1. At least one part of functional parts shown in Fig. 5 is realized by executing a predetermined program through the CPU 11 in Fig. 4.

The information processing apparatus 1 includes a content management unit 31, a BGM and template management unit 32, a slideshow content creation unit 33, a playback unit 34, a play list creation unit 35, and an output control unit 36.

The content management unit 31 manages various pieces of content, such as still images, video content, audio content, and play lists, stored in the HDD 20. Information regarding content managed by the content management unit 31 is output to the output control unit 36 and is used to display a menu screen, which will be described hereinafter.

In creating a play list, the content management unit 31 supplies information regarding the title of a photo album selected by the user to the play list creation unit 35. In playing back a play list, the content management unit 31 reads a photo album to be played back in the play list (i.e., the photo album specified by "Photo Album" in the play list) from the HDD 20 and outputs the photo album to the playback unit 34. In addition, the content management unit 31 stores slideshow content, which is created by the slideshow content creation unit 33 and is supplied therefrom, in the HDD 20.

The BGM and template management unit 32 manages music tracks used as BGM and templates such that each BGM track is related to the corresponding template and stores the relations therebetween in the HDD 20. In creating a play list, the BGM and template management unit 32 outputs information regarding the managed BGM tracks to the output control unit 36. The BGM and template management unit 32 further outputs information regarding a BGM track selected by the user and a template related to the selected BGM track to the play list creation unit 35. In playing back a play list, the BGM and template management unit 32 outputs a template specified by "Used Template" in the play list and a BGM track specified by "Used Music Track" to the playback unit 34.

The slideshow content creation unit 33 compresses data played back by the playback unit 34 (e.g., a data sequence of still images successively played back according to a play list) to create slideshow content according to, e.g., the MPEG-2 standard. The slideshow content created by the slideshow content creation unit 33 is output to the content management unit 31 and is then stored in the HDD 20.

When playing back a play list is instructed, the playback unit 34 obtains the play list instructed to be played back, a photo album specified by "Photo Album" in the play list, and a BGM track specified by "Used Music Track" and then plays back the play list.

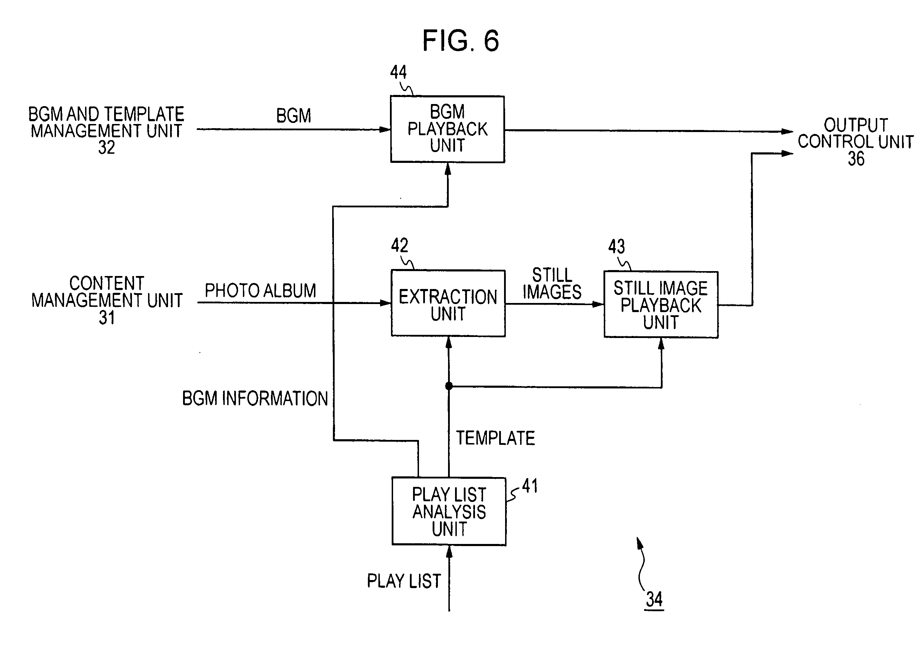

Fig. 6 is a block diagram of the detailed structure of the playback unit 34.

The playback unit 34 includes a play list analysis unit 41, an extraction unit 42, a still image playback unit 43, and a BGM playback unit 44.

When receiving a play list instructed to be played back by the user from the content management unit 31, the play list analysis unit 41 analyzes the play list and outputs identification information assigned to the BGM track specified by "Used Music Track" to the BGM playback unit 44. The play list analysis unit 41 acquires a template specified by "Used Template" from the BGM and template management unit 32 and outputs the template to each of the extraction unit 42 and the still image playback unit 43. The play list analysis unit 41 also outputs information regarding playback duration for the BGM track of once to the extraction unit 42.

The extraction unit 42 thins out still images stored in a photo album supplied from the content management unit 31 according to "Thinning-out Method" (Fig. 3) in the corresponding template supplied from the play list analysis unit 41 to extract still images to be played back. Consequently, playback duration for the still images is adjusted to be substantially equivalent to playback duration for the corresponding BGM track. The still images extracted by the extraction unit 42 are output as playback targets to the still image playback unit 43.

When the thinning-out mode is set in the OFF state, the extraction unit 42 does not thin out still images. The extraction unit 42 outputs all of still images stored in a photo album supplied from the content management unit 31 to the still image playback unit 43 so that all of the still images are played back.

The still image playback unit 43 applies an effect specified by "Effect Type" to still images supplied from the extraction unit 42 and plays back the resultant still images in the order specified by "Image Display Order" in the corresponding template supplied from the play list analysis unit 41. Each still image is played back at timing determined by "PPM" in the corresponding template. The still images (with the effect) played back by the still image playback unit 43 are output to the output control unit 36. The output control unit 36 supplies the images to the TV 2 to display the images.

The BGM playback unit 44 obtains a BGM track from the BGM and template management unit 32 on the basis of identification information supplied from the play list analysis unit 41 and plays back the obtained BGM track synchronously with the playback of the still images through the still image playback unit 43. The music track played back by the BGM playback unit 44 is also output to the output control unit 36. The output control unit 36 allows, e.g., the TV 2 to output the music track.

When the user instructs to play a preview of a play list which is being created, the playback unit 34 with the above-mentioned structure also plays back the play list. When the user instructs to play a preview of a play list, the play list which is being created is supplied from the play list creation unit 35 to the playback unit 34 and is then played back by the respective components in Fig. 6.

Again referring to Fig. 5, the play list creation unit 35 creates a play list, as shown in Fig. 2, describing information regarding a photo album selected by the user, information regarding a BGM track selected by the user, and information regarding a template related to the BGM track. The play list creation unit 35 outputs the created play list to the content management unit 31 and the playback unit 34. In creating the play list, the information regarding the photo album selected by the user is supplied from the content management unit 31 to the play list creation unit 35. The information regarding the BGM track and the information regarding the template related to the music track are supplied from the BGM and template management unit 32 to the play list creation unit 35.

The output control unit 36 allows the TV 2 to display a screen (wizard screen) to show the user a procedure of creating a play list or a menu screen, serving as a screen for starting the operation using the information processing apparatus 1 on the basis of information units supplied from the content management unit 31, the BGM and template management unit 32, and the playback unit 34, respectively.

The menu screen displayed on the TV 2 through the output control unit 36 will now be described.

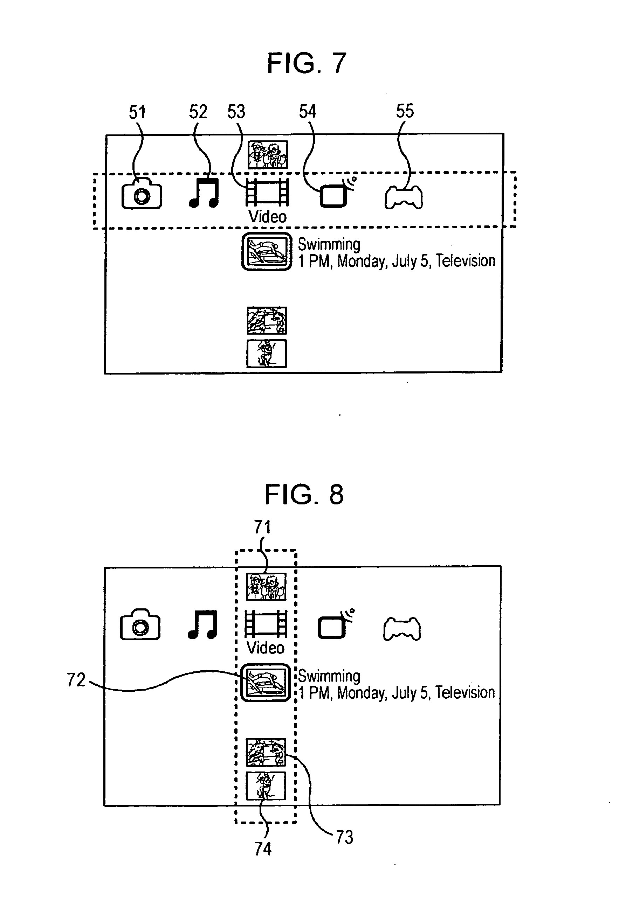

Figs. 7 and 8 are diagrams showing an example of the menu screen.

In the menu screen, category icons 51 to 55 are arranged laterally. Referring to Fig. 7, the category icons 51 to 55 are surrounded by a dotted line. Content icons (video content icons 71 to 74) are arranged longitudinally such that the arrangement of the video content icons 71 to 74 intersect that of the category icons 51 to 55. The video content icons 71 to 74 are surrounded by a dotted line in Fig. 8. Each video content icon indicates content belonging to the category selected by the user. The dotted lines in Figs. 7 and 8 are used for convenience of explanation. Actually, the dotted lines are not displayed on the menu screen.

In the example shown in Figs. 7 and 8, the category icon 51 represents a category for "Photo", the category icon 52 represents a category for "Music", the category icon 53 represents a category for "Video", the category icon 54 represents a category for "Television", and the category icon 55 represents a category for "Game". The category icons 51 to 55 are arranged from the left to the right on the screen.

In the example in Figs. 7 and 8, the user selects "Video" and the video content icons 71 to 74 belonging to the category for "Video" are displayed longitudinally. The content icon 72 is currently selected from among the video content icons 71 to 74. The title of video content indicated by the content icon 72 and comments are displayed adjacent to the content icon 72.

In the above-mentioned menu screen, fundamentally, the user can select any category using a right button or a left button related to the lateral operation on the remote controller and select any piece of content belonging to the selected category using an upper button or a lower button related to the longitudinal operation on the remote controller.

In response to the operation by the user, the category icons 51 to 55 (and another category icon indicating another category which is not shown in Figs. 7 and 8) and the video content icons 71 to 74 (and another content icon which is not shown in Figs. 7 and 8) are simultaneously shifted and are displayed.

For example, in a case where "Video" is selected as shown in Fig. 7, when the user presses the left button once, all of the category icons 51 to 55 are shifted to the right, so that the category icon 52 is displayed in a position currently corresponding to the category icon 53 and the category icon 51 is displayed in a position currently corresponding to the category icon 52.

Similarly, the category icon 53 is displayed in a position currently corresponding to the category icon 54 and the category icon 54 is displayed in a position currently corresponding to the category icon 55. Since the other category icon indicating the other category (not shown in Figs. 7 and 8) is arranged on the left side of the category icon 51, the other category icon is displayed in a position currently corresponding to the category icon 51.

Consequently, "Music" is selected instead of "Video". Content icons indicating respective pieces of audio content belonging to "Music" are displayed longitudinally.

On the other hand, in the state of Fig. 7, when the user presses the right button once, the category icons 51 to 55 are shifted to the left, i.e., in the direction opposite to that in the case where the user presses the left button. Thus, "TV" is selected.

In the state where the video content icons 71 to 74 are displayed as shown in Fig. 7, e.g., when the user presses the upper button once, the video content icons 71 to 74 are shifted upward, so that the content icon 72 is displayed in a position currently corresponding to the content icon 71 and the content icon 73 is displayed in a position currently corresponding to the content icon 72.

Similarly, the content icon 74 is displayed in a position currently corresponding to the content icon 73. The other content icon (not shown in Figs. 7 and 8) is the next lower icon of the content icon 74 and is displayed in a position currently corresponding to the content icon 74.

Consequently, the state where the content icon 72 is selected is switched to a state where the content icon 73 is selected. In this instance, the title of video content represented by the content icon 73 and comments are displayed adjacent to the content icon 73.

In the state in Fig. 7, when the user presses the lower button once, all of the video content icons 71 to 74 are shifted downward, i.e., in the direction opposite to that in the case where the user presses the upper button. Thus, the content icon 71 is selected in that state.

As mentioned above, the user selects any category and any piece of content and then presses an ENTER button on the remote controller, so that a sub-menu can be displayed. The sub-menu includes a list of available operations with respect to the selected content. According to the sub-menu displayed when a certain piece of content is selected, the user can select any operation, such as playback, copying, editing, or deleting, with respect to the selected content.

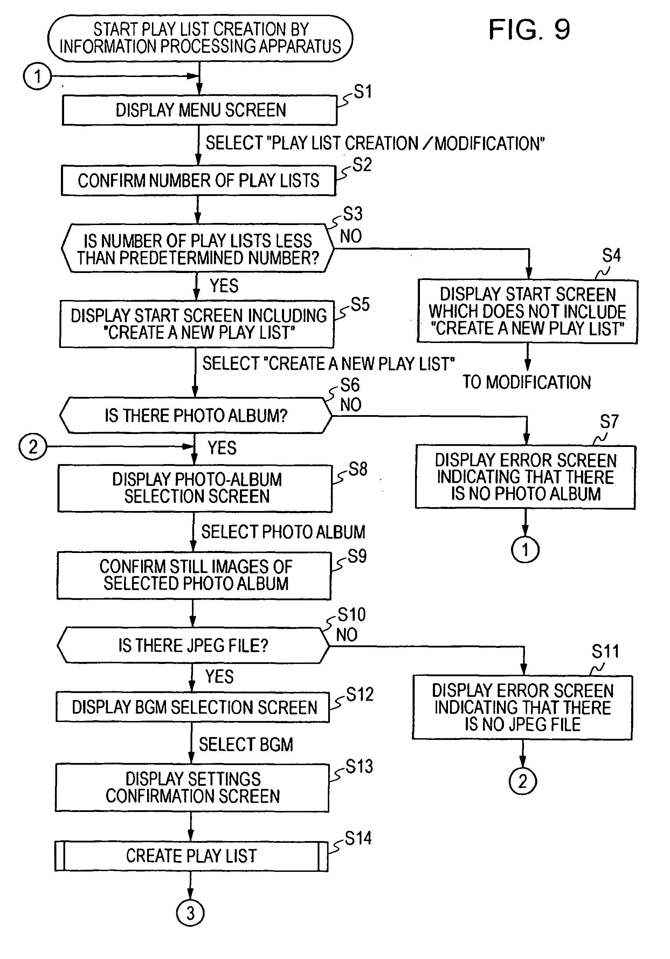

A play list creating process executed by the information processing apparatus 1 will now be described with reference to a flowchart in Figs. 9 to 11.

In step S1, the output control unit 36 allows to display a menu screen as described with reference to Figs. 7 and 8. When "Photo" is selected in the menu screen, content icons representing respective photo albums and an icon representing a wizard used to create or modify a play list are vertically aligned.

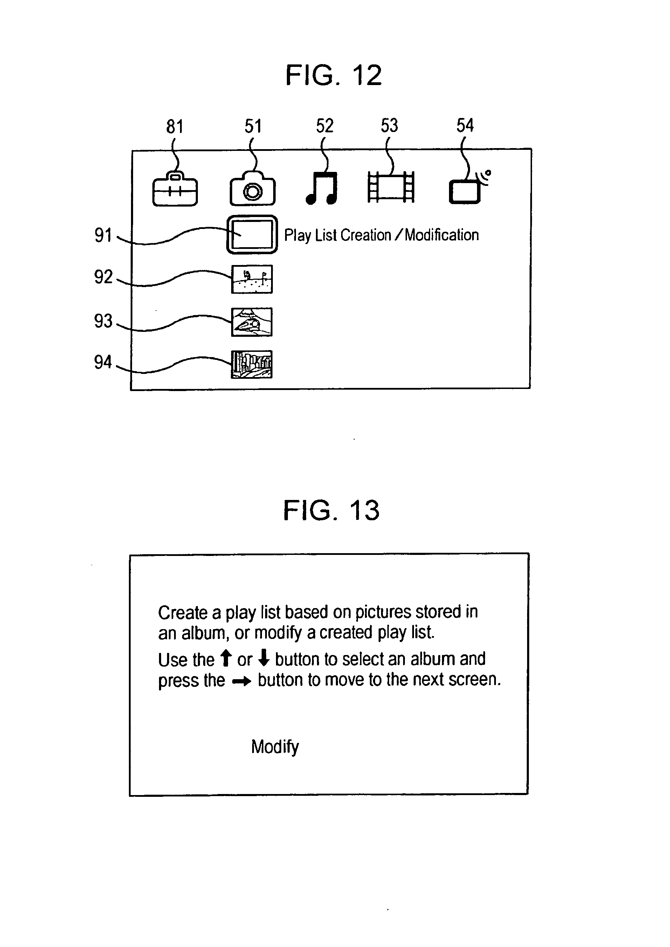

Fig. 12 shows an example of the menu screen displayed in step S1 in Fig. 9. The same components as those in Fig. 7 are designated by the same reference numerals.

Fig. 12 shows the menu screen in which "Photo" is selected. An icon 91 representing the wizard, content icons 92 to 94 representing the respective photo albums are displayed below the category icon 51. Referring to Fig. 12, the icon 91 is selected. Text of "Play List Creation/Modification" is displayed on the right side of the icon 91. In Fig. 12, a category icon 81 representing a category for various settings is displayed on the left side of the category icon 51.

In the case where the icon 91 is selected in the menu screen in Fig. 12, when the user presses the ENTER button (i.e., the user instructs to start the wizard), the process proceeds to step S2.

In step S2, the content management unit 31 confirms the number of play lists which have already been created and been stored in the HDD 20. In step S3, the content management unit 31 determines whether the number of play lists is less than a predetermined number. In other words, in this example, the number of play lists has an upper limit. If the play lists corresponding to the upper limit number have already been created, no more play lists cannot be created.

In step S3, when the content management unit 31 determines that the number of play lists is not less than the predetermined number (i.e., the number of play lists reaches the upper limit), the content management unit 31 notifies the output control unit 36 of the fact. The process proceeds to step S4.

In step S4, the output control unit 36 allows to display a start screen where creating a new play list is not selectable.

Fig. 13 shows an example of the start screen displayed in step S4 in Fig. 9.

In the start screen of Fig. 13, a message "Create a play list based on pictures stored in an album, or modify created play list...." is displayed. "Modify" which is selected to modify a created play list is displayed below the message.

For example, in the state where the text "Modify" is selected (the color of the text is inverted), when the user presses the ENTER button on the remote controller, the user can modify a created play list. When the text "Modify" is selected, the play list creating process shown in Figs. 9 to 11 terminates and play list modification starts. A description of the play list modification is omitted.

On the other hand, in step S3, when determining that the number of play lists is less than the predetermined number, the content management unit 31 notifies the output control unit 36 of the fact. The process proceeds to step S5.

In step S5, the output control unit 36 allows to display the start screen where creating a new play list is selectable.

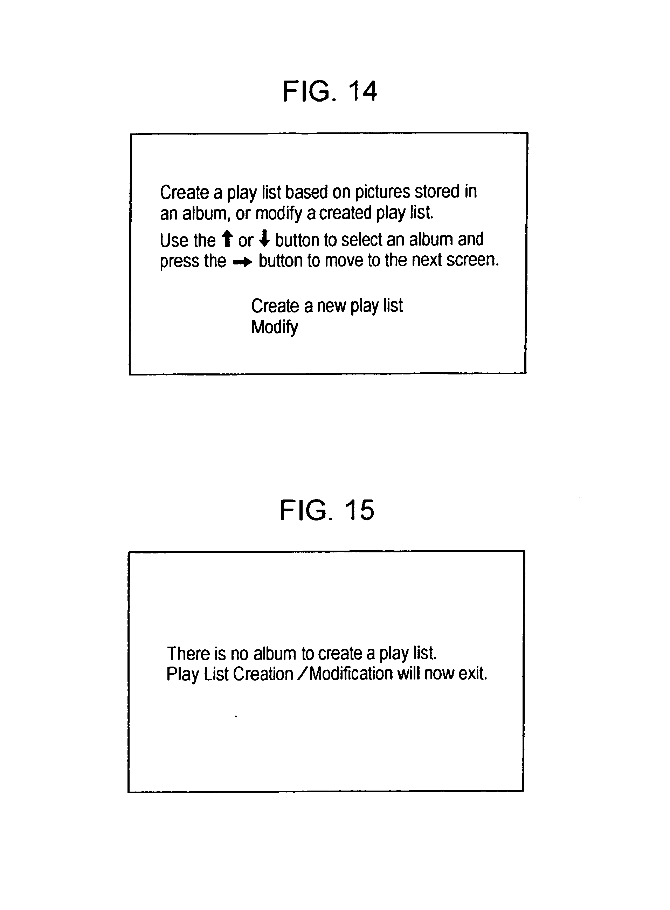

Fig. 14 shows an example of the start screen displayed in step S5 in Fig. 9.

The screen in Fig. 14 is the same as that in Fig. 13 except that text "Create a new play list" is displayed above the text "Modify". When the user presses the ENTER button in the state where the text "Create a new play list" is selected, creating a new play list is started. The process proceeds to step S6.

In step S6, the content management unit 31 determines whether photo albums are stored in the HDD 20. If NO, the content management unit 31 notifies the output control unit 36 of the fact. After that, the process proceeds to step S7.

In step S7, the output control unit 36 allows to display an error screen indicating that any photo album is not stored.

Fig. 15 shows an example of the screen displayed in step S7 in Fig. 9.

In the screen of Fig. 15, a message "There is no album to create a play list. Play List Creation/Modification will now exit." is displayed. As mentioned above, in the information processing apparatus 1, any photo album is selected, so that still images to be played back as a slideshow are selected. When there is no photo album, the user cannot select still images to be played back. After that, the process is returned to step S1. Step S1 and the subsequent steps are executed.

On the other hand, in step S6, when determining that at least one photo album is stored in the HDD 20, the content management unit 31 notifies the output control unit 36 of the fact and also outputs information (the title of the photo album, an image serving as an icon, etc.) regarding the photo album stored in the HDD 20 to the output control unit 36. After that, the process proceeds to step S8.

In step S8, the output control unit 36 allows to display a selection screen where any photo album is selected.

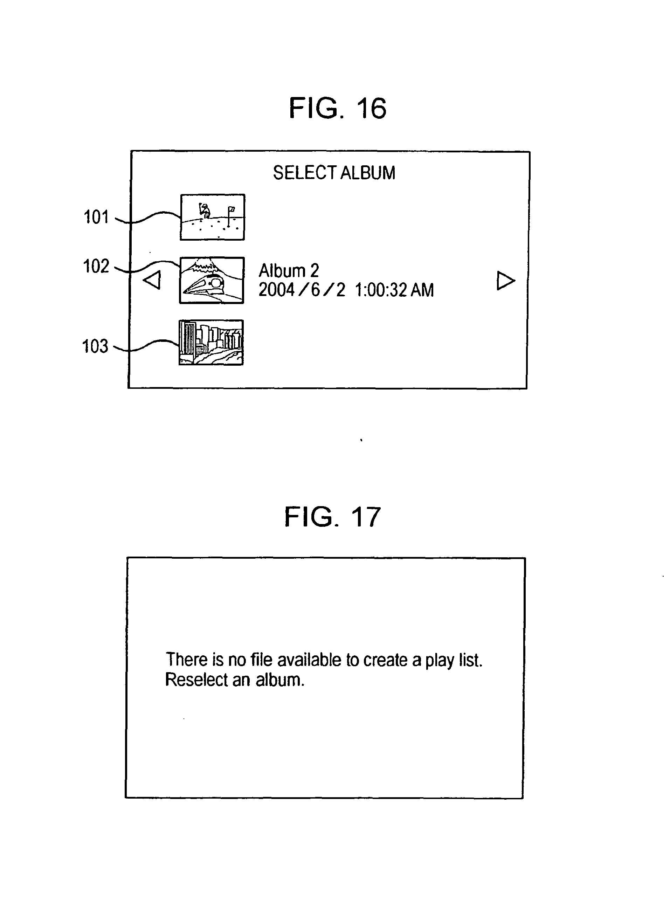

Fig. 16 shows an example of the selection screen displayed in step S8 in Fig. 9.

In the screen of Fig. 16, icons 101 to 103 representing three photo albums are displayed. In this example, the icon 102 is selected. The title of the photo album, "Album 2", and date and time of creation (date and time of import), "2004/6/2 1:00:32 AM", are displayed on the right side of the icon 102. The user may select any photo album in the screen of Fig. 16.

When any photo album is selected, in step S9, the content management unit 31 confirms the format of still images stored in the selected photo album. In step S10, the content management unit 31 determines whether the photo album selected by the user includes still images (JPEG file) compressed according to the Joint Photographic Expert Group (JPEG) standard. In other words, in this example, still images to be processed are stored in a JPEG file.

In step S10, when determining that the photo album selected by the user does not include a JPEG file, the content management unit 31 notifies the output control unit 36 of the fact. The process proceeds to step S11.

In step S11, the output control unit 36 allows to display an error screen indicating that there is no JPEG file.

Fig. 17 shows an example of the error screen displayed in step S11 in Fig. 9.

In the screen of Fig. 17, a message "There is no file available to create a play list. Reselect an album." is displayed. After the screen is displayed, the process is returned to step S8 and the user is prompted to reselect a photo album.

On the other hand, in step S10, when determining that the selected photo album includes a JPEG file, the content management unit 31 notifies the output control unit 36 of the fact. The process proceeds to step S12.

In step S12, the output control unit 36 allows to display a selection screen where any BGM track is selected. Information regarding BGM tracks, i.e., the titles of BGM tracks and icons indicating BGM tracks, are supplied from the BGM and template management unit 32.

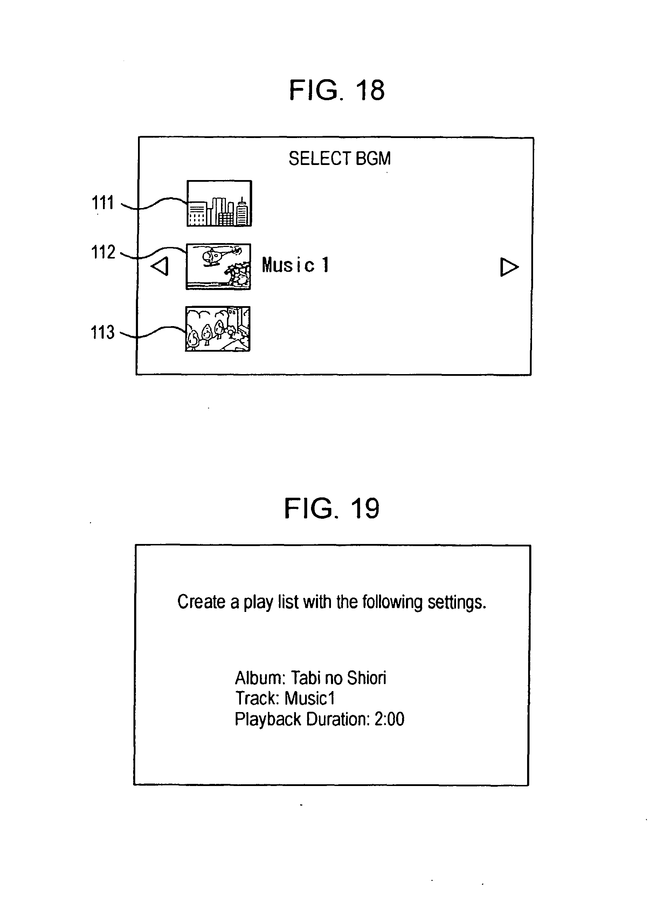

Fig. 18 shows an example of the selection screen displayed in step S12 in Fig. 9.

In the screen of Fig. 18, icons 111 to 113 representing three music tracks are displayed. In this example, the icon 112 is selected. The title of the music track, "Music 1", is displayed on the right side of the icon 112. The user may select a favorite music track on the screen of Fig. 18 and use the selected one as BGM for a slideshow. As mentioned above, the BGM track is related to the corresponding template. Therefore, selecting a music track means selecting a template.

When any BGM track is selected, in step S13, the output control unit 36 allows to display a confirmation screen to confirm the details of the above-mentioned selections (settings about the play list to be created).

Fig. 19 shows an example of the confirmation screen displayed in step S13 in Fig. 9.

In the screen of Fig. 19, the title of the photo album selected by the user, "Tabi no Shiori (Travel Plan)", the title of the BGM track selected by the user, "Music 1", and playback duration for "Music 1", "2:00", are displayed. The user confirms the details of the settings. The user may select whether the user creates a play list based on the settings.

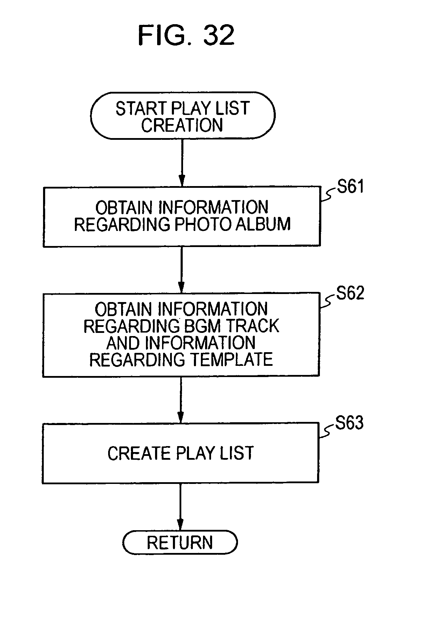

When the user instructs to create a play list, a play list is created in step S14. That is, the play list creation unit 35 creates a play list, as shown in Fig. 2, according to the selections by the user. The details of play list creation will be described hereinafter with reference to a flowchart of Fig. 32. The play list created in this step is not named, i.e., "Play List Name" (Fig. 2) is not set.

As mentioned above, principally, the user can create a play list with two operations, i.e., the operation of selecting a photo album and the operation of selecting a BGM track.

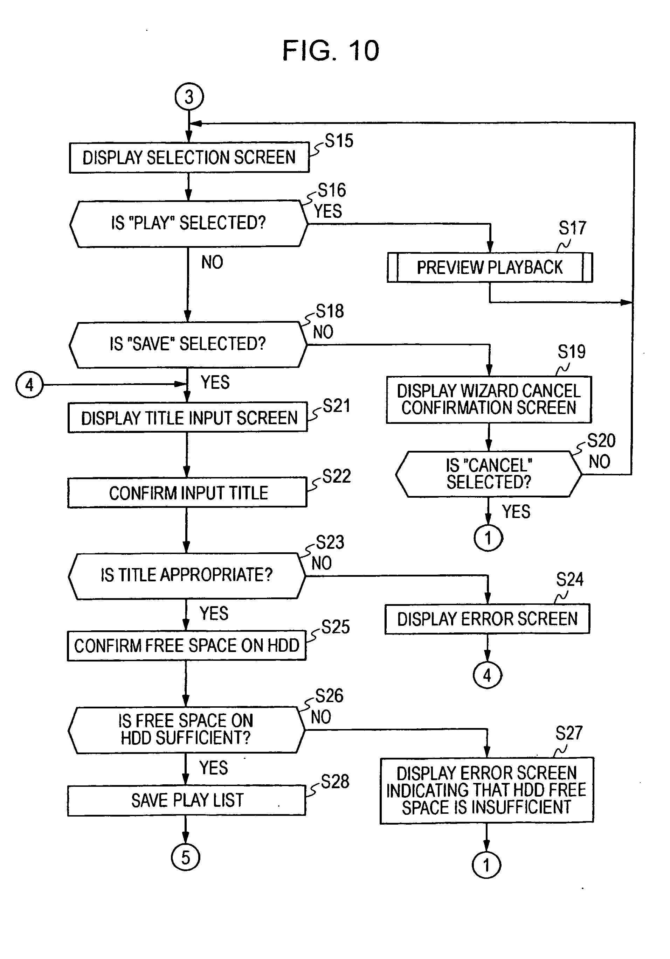

After the play list is created, in step S15 (Fig. 10), the output control unit 36 allows to display a selection screen where playing a preview of the play list or saving the play list is selectable.

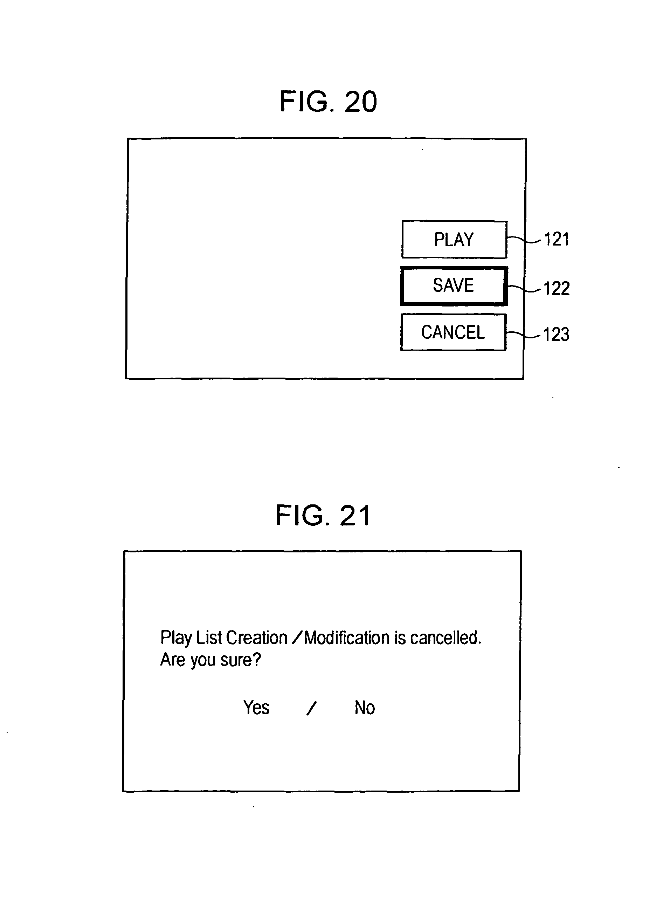

Fig. 20 shows an example of the selection screen displayed in step S15 in Fig. 10.

In the selection screen of Fig. 20, a PLAY button 121 that is operated to play back a preview of the play list created in step S14, a SAVE button 122 that is operated to save the play list, and a CANCEL button 123 that is operated to cancel the current process are displayed.

In step S16, the play list creation unit 35 determines whether the PLAY button 121 in Fig. 20 is operated to select preview playback. When determining that preview playback is selected, the play list creation unit 35 outputs the play list created in step S14 to the playback unit 34.

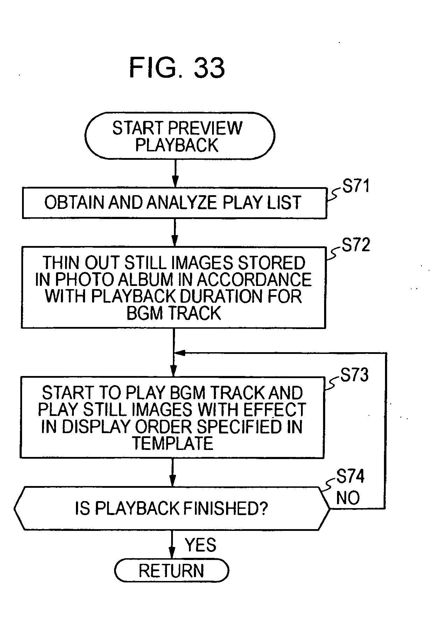

In step S17, preview playback is performed, i.e., the play list created in step S14 is played back. Thus, the user can confirm how the still images are to be played back according to the playback procedure specified by the play list. The details of preview playback will be described hereinafter with reference to a flowchart of Fig. 33. When the preview playback terminates, the process is returned to step S15 and step S15 and the subsequent steps are executed.

On the other hand, in step S16, when the play list creation unit 35 determines that playing the preview of the play list is not selected, the process proceeds to step S18. The play list creation unit 35 determines whether the SAVE button 122 is operated to select saving the play list.

In step S18, when determining that saving the play list is not selected, the play list creation unit 35 determines that the CANCEL button 123 has been operated and notifies the output control unit 36 of the fact. After that, the process proceeds to step S19.

In step S19, the output control unit 36 allows to display a cancel confirmation screen to cancel the wizard.

Fig. 21 shows an example of the cancel confirmation screen displayed in step S19 in Fig. 10.

In the screen of Fig. 21, a message "Play List Creation/Modification is cancelled. Are you sure?" is displayed. Characters "Yes" and "No" are displayed below the message. When the user selects "Yes", the user can terminate the creation of the play list. When the user selects "No", the user can continue the play list creation.

In step S20, the output control unit 36 determines whether canceling the play list creation is selected (i.e., "Yes" in Fig. 21 is selected). If the output control unit 36 determines that the cancel is selected, the process is returned to step S1 and step S1 and the subsequent steps are executed. On the other hand, in step S20, when the output control unit 36 determines that the cancel is not selected, the process is returned to step S15 and step S15 and the subsequent steps are executed.

On the other hand, in step S18, when determining that saving the play list is selected, the play list creation unit 35 notifies the output control unit 36 of the fact. The process proceeds to step S21. When saving the play list is selected, the play list created in step S14 is output from the play list creation unit 35 to the content management unit 31.

In step S21, the output control unit 36 allows to display an input screen to input the title of the play list (play list name).

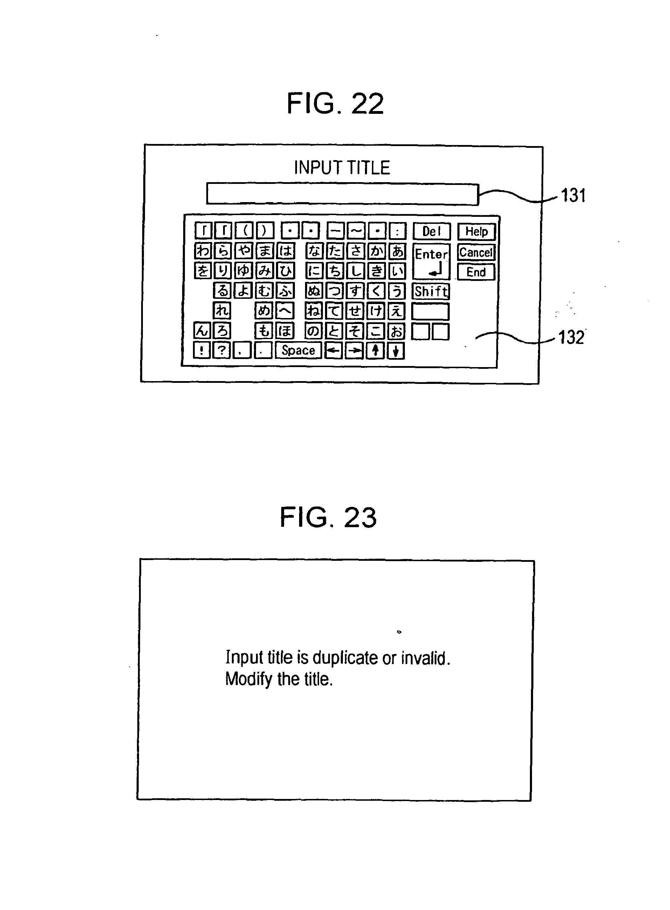

Fig. 22 shows an example of the input screen displayed in step S21 in Fig. 10.

In the screen of Fig. 22, a title input field 131 displaying a title input by the user is displayed and a keyboard (software keyboard) 132 is displayed below the title input field 131. The user can input the title of the play list using the keyboard 132.

When the title of the play list is input, in step S22, the content management unit 31 confirms the input title. In step S23. The content management unit 31 determines whether the input title is appropriate.

In step S23, when determining that the input title is not appropriate, the content management unit 31 notifies the output control unit 36 of the fact. The process proceeds to step S24. For example, when another play list having the same title has already been stored, or when the input title includes a character which is prohibited to be used, the content management unit 31 determines that the input title is not appropriate.

In step S24, the output control unit 36 allows to display an error screen indicating that the input title is not appropriate.

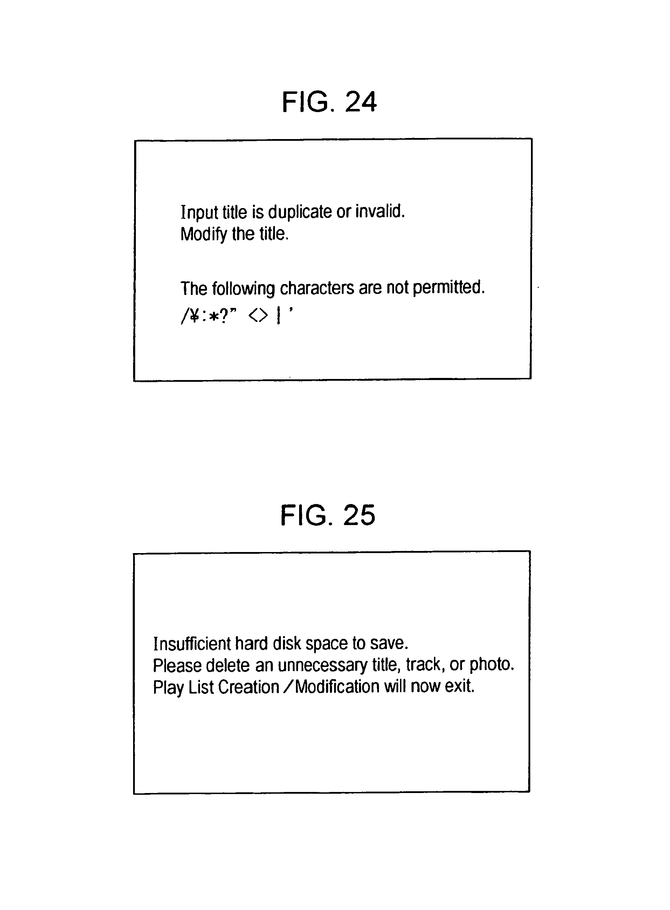

Figs. 23 and 24 show examples of the error screen displayed in step S24 in Fig. 10.

Fig. 23 shows one example of the error screen which is displayed when another play list having the same title has already been stored. In the screen of Fig. 23, a message "Input title is duplicate or invalid. Modify the title." is displayed.

Fig. 24 shows another example of the error screen which is displayed when the input title includes a prohibited character. In the screen of Fig. 24, in addition to the same message as that in Fig. 23, a message "The following characters are not permitted." and prohibited characters are displayed.

After the error screen indicating that the input title is not appropriate is displayed, the process is returned to step S21. The user is prompted to again input a title.

On the other hand, in step S23, when the content management unit 31 determines that the input title is appropriate, the process proceeds to step S25 to check free space on the HDD 20.

In step S26, the content management unit 31 determines whether the HDD 20 has sufficient space for saving the play list. When determining that the HDD 20 has insufficient space, the content management unit 31 notifies the output control unit 36 of the fact. After that, the process proceeds to step S27.

In step S27, the output control unit 36 allows to display an error screen indicating that free space on the HDD 20 is insufficient.

Fig. 25 shows an example of the error screen displayed in step S27 in Fig. 10.

In the screen of Fig. 25, a message "Insufficient hard disk space to save. Please delete an unnecessary title, track, or photo. Play List Creation/Modification will now exit." is displayed.

After the error screen indicating that hard disk space is insufficient is displayed, the process is returned to step S1 and step S1 and the subsequent steps are executed.

On the other hand, in step S26, when the content management unit 31 determines that the HDD 20 has sufficient space for saving the play list, the process proceeds to step S28. The created play list is saved as one piece of content belonging to "Photo". Thus, in the menu screen, an icon representing the saved play list is displayed below the "Photo" icon.

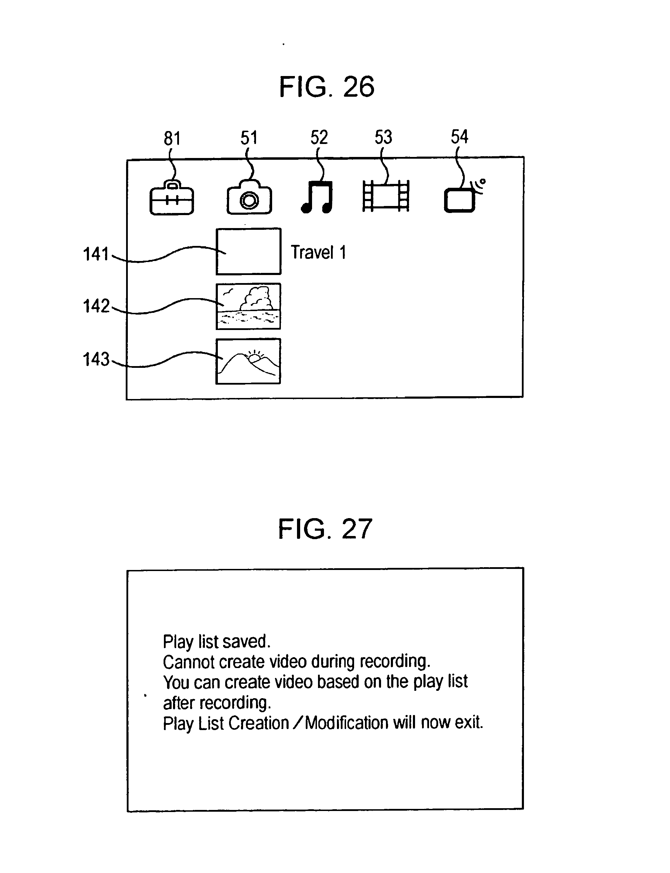

Fig. 26 shows an example of the menu screen where the play list, serving as a piece of content belonging to "Photo", is added.

In the screen of Fig. 26, the category icons 51 to 54 and 81 are arranged laterally and "Photo" is the currently selected category. When "Photo" is selected, an icon 141 representing the play list saved in step S28 in Fig. 10 is displayed below the category icon 51 as shown in Fig. 26. The title of this play list, "Travel 1", is displayed on the right side of the icon 141.

As mentioned above, the play list, serving as a piece of content belonging to "Photo", is displayed together with other pieces of still image content (photo albums) in the menu screen. Therefore, the user can select the play list in the same way as the other pieces of still image content and play back it. In the screen of Fig. 26, content icons 142 and 143 displayed below the icon 141 represent photo albums, respectively. Instead of displaying the icon representing the play list such that the play list icon and the icons representing the respective photo albums are aligned, one folder and the photo album icons may be displayed such that they are aligned. The icon representing the created play list can be displayed at a level lower than the folder in the hierarchy.

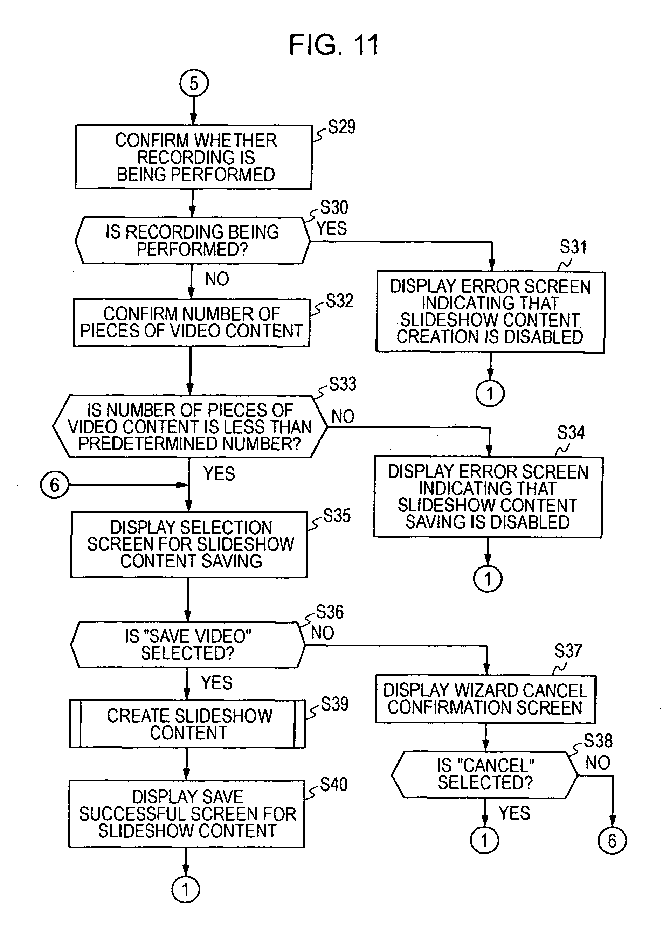

When the play list is saved, in step S29 (Fig. 11), the content management unit 31 checks whether the recording/playback unit 17 is recording a TV program.

As mentioned above, according to the information processing apparatus 1, the playback result of the play list can be stored as video content (slideshow content). In this instance, whether the play list can be created as slideshow content is confirmed. A sequence of still images (JPEG file) with an effect, which are to be successively output as the playback result of the play list, are compressed according to, e.g., the MPEG-2 standard, thus creating slideshow content. Accordingly, if the recording/playback unit 17 for MPEG-2 encoding is already executing MPEG-2 encoding in order to record a TV program, slideshow content creation is disabled. So long as the recording/playback unit 17 can simultaneously record pieces of content by MPEG-2 encoding, the confirmation can be omitted.

In step S30, the content management unit 31 determines whether the recording/playback unit 17 is recording. When determining that the recording/playback unit 17 is recording, the content management unit 31 notifies the output control unit 36 of the fact. The process proceeds to step S31.

In step S31, the output control unit 36 allows to display an error screen indicating that slideshow content creation is disabled.

Fig. 27 shows an example of the error screen displayed in step S31 in Fig. 11.

In the screen of Fig. 27, a message "Play list saved. Cannot create video during recording. You can create video based on the play list after recording. Play List Creation/Modification will now exit." is displayed. The term "video" in this message means "slideshow content".

After the error screen indicating that slideshow content cannot be created is displayed, the process is returned to step S1 and step S1 and the subsequent steps are executed. When the user selects the icon representing the play list displayed as content belonging to "Photo" in the menu screen, the sub-menu (including the list of available operations with respect to the pay list) is displayed. The user can create slideshow content using the sub-menu. Text "You can create video based on the play list after recording" in the message displayed in the error screen of Fig. 27 means the above-mentioned operation.

On the other hand, in step S30, when the content management unit 31 determines that the recording/playback unit 17 is not recording, i.e., slideshow content can be created, the process proceeds step S32. The content management unit 31 confirms the number of pieces of video content (including a TV program and slideshow content) stored in the HDD 20. In other words, in this example, the number of pieces of video content which can be stored in the HDD 20 has an upper limit. If the pieces of video content corresponding to the upper limit number have already been stored, no more video content cannot be stored.

In step S33, the content management unit 31 determines whether the number of pieces of video content is less than a predetermined number. When determining that the number of pieces of video content is not less than the predetermined number (it reaches the upper limit), the content management unit 31 notifies the output control unit 36 of the fact. The process proceeds to step S34.

In step S34, the output control unit 36 allows to display an error screen indicating that slideshow content creation (saving) is disabled.

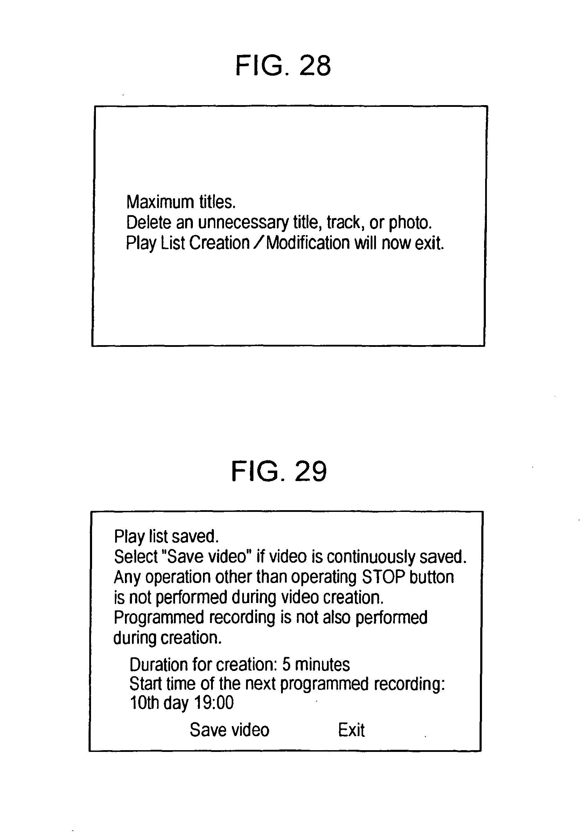

Fig. 28 shows an example of the error screen displayed in step S34 in Fig. 11.

In the screen of Fig. 28, a message "Maximum titles. Delete an unnecessary title, track, or photo. Play List Creation/Modification will now exist." is displayed.

After the error screen indicating that video content creation is disabled is displayed, the process is returned to step S1 and step S1 and the subsequent steps are executed.

On the other hand, in step S33, when determining that the number of pieces of video content is less than the predetermined number, the content management unit 31 notifies the output control unit 36 of the fact. The process proceeds to step S35.

In step S35, the output control unit 36 allows to display a selection screen which prompts the user to determine whether slideshow content is saved.

Fig. 29 shows an example of the selection screen displayed in step S35 in Fig. 11.

The screen of Fig. 29 includes a message "Play list saved. Select "Save video" if video is continuously saved. Any operation other than operating STOP button is not performed during video creation. Programmed recording is not also performed during creation.", duration for slideshow content creation, and start time of the next programmed recording. Even if programmed recording is set, any TV program is not recorded during slideshow content creation. Accordingly, in this screen, the user can determine whether the user creates slideshow content while checking remaining time before starting the next programmed recording.

In the lower portion of the screen in Fig. 29, text "Save video" and text "Exit" meaning that processing terminates without saving slideshow content are displayed. The user operates the remote controller to select the text "Save video", thus saving slideshow content into the HDD 20.

In step S36, the content management unit 31 determines whether the text "Save video" is selected in the selection screen in Fig. 29. When determining that the text "Save video" is not selected, i.e., the text "Exit" is selected in the selection screen of Fig. 29, the content management unit 31 notifies the output control unit 36 of the fact. The process proceeds to step S37.

In step S37, the output control unit 36 allows to display a cancel confirmation screen to confirm whether the wizard is canceled. The cancel confirmation screen displayed at that time is the same as that in Fig. 21 displayed in step S19 in Fig. 10.

In step S38, whether canceling the wizard is selected in the cancel confirmation screen is determined. When it is determined that the cancel is selected, the process is returned to step S1 and step S1 and the subsequent steps are executed. In step S38, if it is determined that canceling the wizard is not selected, the process is returned to step S35. Whether slideshow content is saved is again determined.

On the other hand, in step S36, if the content management unit 31 determines that the text "Save video" is selected in the selection screen of Fig. 29, the process proceeds to step S39.

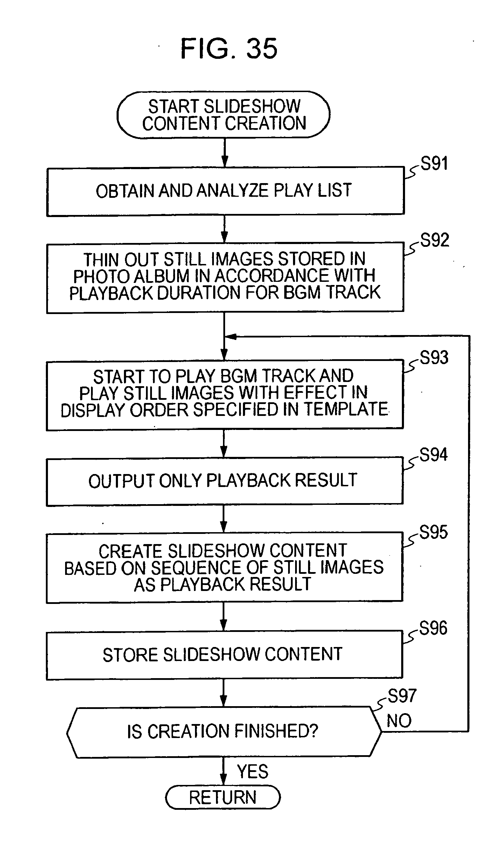

In step S39, slideshow content is created. The created slideshow content is output from the slideshow content creation unit 33 to the content management unit 31 and is then stored in the HDD 20. The details of slideshow content creation will be described hereinafter with reference to a flowchart of Fig. 35.

In step S40, the output control unit 36 allows to display a save successful screen indicating that saving slideshow content is completed.

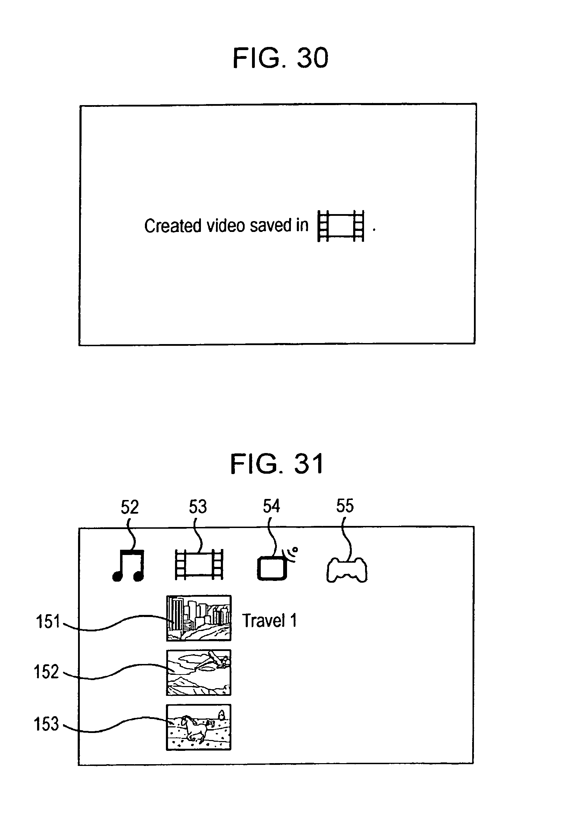

Fig. 30 shows an example of the save successful screen displayed in step S40 in Fig. 11.

The screen of Fig. 30 includes a message indicating that the slideshow content created in step S39 is saved as one piece of content belonging to "Video".

Consequently, an icon representing the slideshow content is added below "Video" in the menu screen.

Fig. 31 shows an example of the menu screen where the icon representing the slideshow content is added as one piece of content belonging to "Video".

In the screen of Fig. 31, the category icons 52 to 55 are arranged laterally and the currently selected category is "Video". An icon 151 representing slideshow content is displayed below the category icon 53 as shown in Fig. 31.

The title of the slideshow content, "Travel 1", is displayed on the right side of the icon 151. In other words, the slideshow content represented by the icon 151 in Fig. 31 is created based on the playback result of the play list represented by the icon 141 in Fig. 26. Accordingly, the set title is the same as that of the play list represented by the icon 141 in Fig. 26.

As mentioned above, slideshow content created based on the playback result of a play list is displayed as content belonging to "Video" in the menu screen in the same way as other pieces of video content, e.g., TV programs. Therefore, the user can select slideshow content in the same way as the user selects another piece of video content and play back the content. In the screen of Fig. 31, content icons 152 and 153 displayed below the icon 151 represent TV programs, respectively.

In addition, the user can write (record) slideshow content into the optical disc 25 and/or transmit the content to another apparatus via the communication unit 21 in the same way as the other pieces of video content relating to TV programs. Accordingly, the user can insert the optical disc 25, in which the slideshow content is recorded, into another player and then view the slideshow content.

In accordance with the above-mentioned series of screen messages, the user can create a play list mainly with two operations, i.e., the operation of selecting a photo album and the operation of selecting a BGM track. In addition, the user can create slideshow content subsequently to the creation of the play list.

Play list creation in step S14 in Fig. 9 will now be described with reference to Fig. 32.

In step S61, the play list creation unit 35 obtains identification information regarding the photo album selected by the user, e.g., information indicating the title thereof. In step S62, the play list creation unit 35 obtains identification information of the BGM track selected by the user and that of the template related to the music track. When the user selects any photo album, the play list creation unit 35 receives information regarding the title of the photo album from the content management unit 31. When the user selects any BGM track, the play list creation unit 35 receives the identification information of the music track and that of the template related to the music track from the BGM and template management unit 32.

In step S63, the play list creation unit 35 describes the identification information of the photo album obtained in step S61 as "Photo Album" (Fig. 2). Similarly, the play list creation unit 35 describes the BGM track and the template obtained in step S62 as "Used Music Track" and "Used Template", thus creating a play list. After the play list is created, the process is returned to step S14 in Fig. 9 and the subsequent steps are executed.

When a still image is selected as "Preferred Image" by the user, the play list creation unit 35 describes the still image as "Preferred Image". When the user inputs a title (i.e., in step S23 in Fig. 10, it is determined that the input title is appropriate), the input title is described as "Play List Name" in the play list.

When the user instructs to play a preview of the play list, the play list created by the play list creation unit 35 as mentioned above is supplied to the playback unit 34. When the user instructs to save the play list, the play list is supplied to the content management unit 31.

Preview playback in step S17 in Fig. 10 will now be described with reference to Fig. 33.

In step S71, the play list analysis unit 41 (Fig. 6) obtains a play list supplied from the play list creation unit 35 and analyzes the play list. When the user instructs to play back a preview of the play list, the created play list is supplied from the play list creation unit 35 to the play list analysis unit 41.

The play list analysis unit 41 outputs identification information of a music track specified by "Used Music Track" in the play list to the BGM playback unit 44. In addition, the play list analysis unit 41 obtains a template specified by "Used Template" from the BGM and template management unit 32 and outputs the template to the extraction unit 42 and the still image playback unit 43. The play list analysis unit 41 also outputs information regarding playback duration for the BGM track to the extraction unit 42.

In step S72, the extraction unit 42 thins out still images stored in a photo album supplied from the content management unit 31 in accordance with the playback duration of the BGM track, thus extracting the still images to be played back. Thinning out the still images by the extraction unit 42 is performed according to "Thinning-out Method) (Fig. 3) in the template supplied from the play list analysis unit 41. For example, the still images stored in the photo album are thinned out on a random basis such that, e.g., the still images corresponding to the number of still images capable of being played back for a period equivalent to the playback duration for the BGM track are remained. The extraction unit 42 outputs the extracted still images to the still image playback unit 43.

In step S73, the BGM playback unit 44 obtains a music track from the BGM and template management unit 32 on the basis of the identification information of the BGM track supplied from the play list analysis unit 41 and starts to play back the music track. The still image playback unit 43 applies an effect specified by "Effect Type" to the still images supplied from the extraction unit 42 and plays back the resultant still images in the order specified by "Image Display Order" in the template supplied from the play list analysis unit 41.

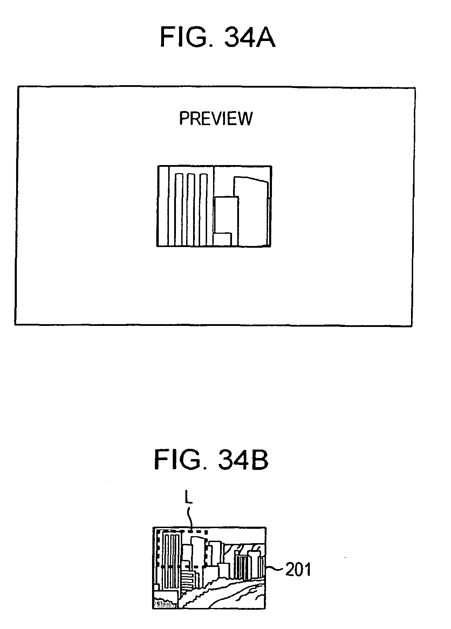

Consequently, a screen shown in, e.g., Fig. 34A is displayed on the TV 2. In the screen of Fig. 34A, text "PREVIEW" applied by the playback unit 34 is displayed. Below the text, one still image with a predetermined effect is displayed. The image displayed in the screen of Fig. 34A corresponds to a part surrounded by a dotted line L in one frame (still image) 201 in Fig. 34B which has been captured and been imported to the information processing apparatus 1. According to the effect, for example, the part is initially displayed as shown in Fig. 34A and the entire frame 201 of Fig. 34B is gradually displayed. In this example, the still image playback unit 43 applies the effect (sub-effects) to the still image 201 such that only the part surrounded by the dotted line L is initially displayed and the entire still image 201 is gradually displayed. Various sub-effects are applied to the other still images.

While the screen is displayed as shown in Fig. 34A, the music track played back through the BGM playback unit 44 is output as BGM from a speaker of the TV 2 or a speaker connected to the information processing apparatus 1.

In step S74, the still image playback unit 43 determines whether playback of the still images is completed. If the still image playback unit 43 determines that the playback is not completed, the process is returned to step S73 and playing back the still images is repeated.

On the other hand, in step S74, when the still image playback unit 43 determines that the playback is finished, the process is returned to step S17 in Fig. 10 and the subsequent steps are executed. Since the extraction unit 42 adjusts the number of still images to be played back, when the playback of the still images is completed, playback of the BGM track is substantially simultaneously finished.

Thus, the user can view a preview of the play list and select whether to save the created play list.

In the case where the user sets the thinning-out mode to the OFF state, if the playback duration for the still images is longer than that for the BGM track, all of the still images stored in the photo album are played back. While all of the still images are played back, the BGM track can be played repeatedly. This prevents that the BGM track is finished first and the latter still images are played back without BGM.

Slideshow content creation in step S39 in Fig. 11 will now be described with reference to Fig. 35.

Steps S91 to S93 in Fig. 35 are the same as steps S71 to S73 in Fig. 33. In other words, in step S91, the play list analysis unit 41 analyzes a play list supplied from the play list creation unit 35. The play list analysis unit 41 outputs identification information of a BGM track as the analysis result to the BGM playback unit 44 and outputs a template to the extraction unit 42 and the still image playback unit 43.

In step S92, the extraction unit 42 thins out still images stored in a photo album. In step S93, the BGM track is played back and the still images extracted through the extraction unit 42 are played back. The still images played by the still image playback unit 43 and the music track played by the BGM playback unit 44 are output to each of the output control unit 36 and the slideshow content creation unit 33.

In step S94, the output control unit 36 allows to display a sequence of the still images with an effect (without outputting another information regarding "PREVIEW" as shown in Fig. 34A) on the basis of the output of the still image playback unit 43. The sequence of still images serves as the playback result of the play list.

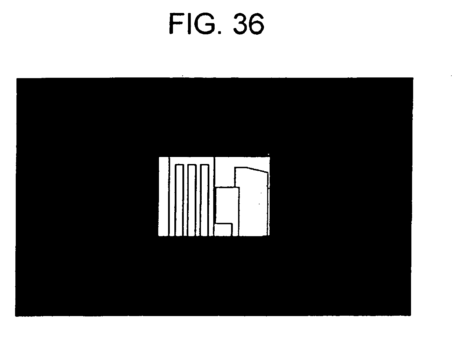

Thus, as shown in Fig. 36, only the still images with the effect are displayed on the TV 2. The slideshow content creation unit 33 receives only the sequence of still images serving as the playback result obtained by the still image playback unit 43. In this example, the BGM track played by the BGM playback unit 44 is also output from the speaker of the TV 2.

Step S93 and subsequent steps are repeated until slideshow content creation is finished. Accordingly, the screen displaying only the playback result as shown in Fig. 36 is continuously displayed until slideshow content creation is finished. Since unnecessary information is not displayed in the screen during slideshow content creation, the user can confirm the details of the slideshow content during creation.

In step S95, the slideshow content creation unit 33 encodes the sequence of still images supplied from the playback unit 34 according to, e.g., the MPEG-2 standard to create slideshow content. In step S96, the slideshow content creation unit 33 stores the created slideshow content on the HDD 20.

In step S97, the slideshow content creation unit 33 determines whether slideshow content creation is finished (i.e., whether the entire playback result by the playback unit 34 is encoded according to the MPEG-2 standard). If NO, the process is returned to step S93. Step S93 and the subsequent steps are repeated.

On the other hand, in step S97, when the slideshow content creation unit 33 determines that slideshow content creation is completed, the process is returned to step S39 in Fig. 11 and the subsequent steps are executed. Consequently, an icon representing the created slideshow content is added to "Video" in the menu screen.

According to the above-mentioned series of processing steps, the user can easily and rapidly create a play list. In addition, the user can easily and rapidly store data identical to the played play list as video content (slideshow content).

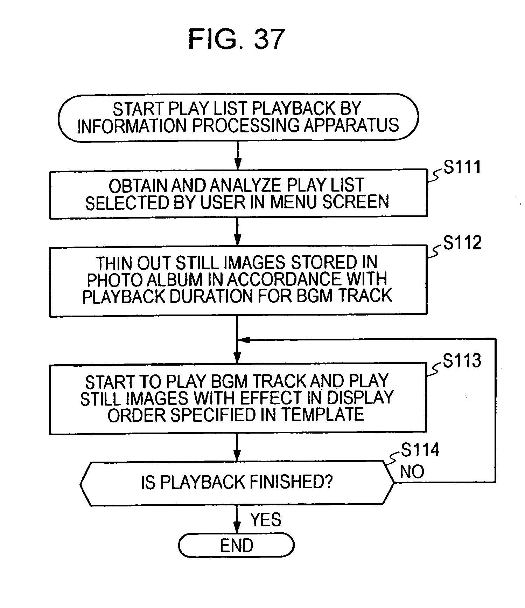

Play list playback by the information processing apparatus 1 will now be described with reference to a flowchart of Fig. 37.

This process is executed when the user instructs to play back a play list created by the above-mentioned series of steps in the menu screen. As described with reference to Fig. 26, the created play list is displayed as content belonging to "Photo" in the menu screen. The user may instruct to play back the play list.

The process of Fig. 37 is fundamentally similar to that in Fig. 33. In other words, when the user selects any play list in the menu screen and instructs to play back the play list, in step S111, the play list analysis unit 41 obtains the play list supplied from the content management unit 31 and analyzes it. The play list analysis unit 41 outputs identification information of a BGM track to the BGM playback unit 44 and outputs the corresponding template to each of the extraction unit 42 and the still image playback unit 43.

In step S112, the extraction unit 42 thins out still images stored in the corresponding photo album supplied from the content management unit 31 and outputs the extracted still images to the still image playback unit 43.

In step S113, the BGM playback unit 44 starts to play back the BGM track. The still image playback unit 43 applies the corresponding effect to the still images supplied from the extraction unit 42 and plays back the resultant still images. Thus, a screen, e.g., as shown in Fig. 36, is displayed on the TV 2.

In step S114, the still image playback unit 43 determines whether the playback of the still images is finished. If the unit 43 determines that the playback is not completed, the process is returned to step S113 to repeat the playback of the still images. In step S114, when the still image playback unit 43 determines that the playback is completed, the process terminates.

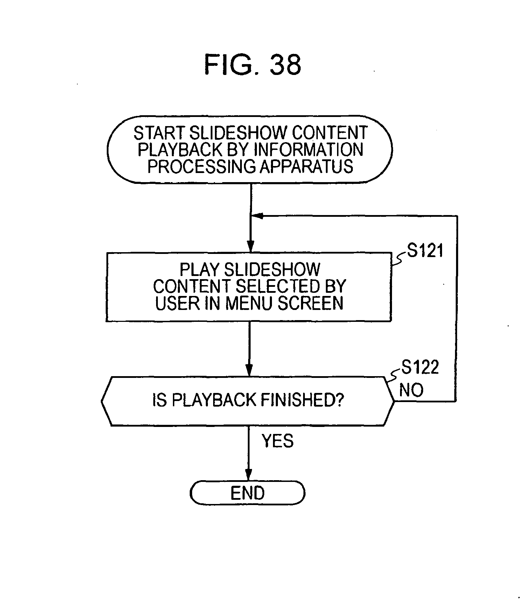

Slideshow content playback by the information processing apparatus 1 will now be described with reference to a flowchart of Fig. 38.

This process is executed when the user instructs to play back slideshow content created by the above-mentioned series of steps in the menu screen. As described with reference to Fig. 31, the created slideshow content is displayed as content belonging to "Video" in the menu screen. The user may instruct to play back the content or write it on the optical disc 25.

Since slideshow content is compressed according to the MPEG-2 standard in the same way as video content, such as a television program, the slideshow content is played back by the recording/playback unit 17 in Fig. 4. As a matter of course, the slideshow content may be played back by software.

In step S121, the recording/playback unit 17 reads slideshow content, selected by the user in the menu screen, from the HDD 20 and plays back the content. Image data and audio data (BGM data) obtained by the recording/playback unit 17 are output from the output unit 19 to the TV 2.

In step S122, the recording/playback unit 17 determines whether playback is finished. If the unit 17 determines that the playback is not finished, the process is returned to step S121 and playing back the slideshow content is repeated. In step S122, when the recording/playback unit 17 determines that the playback is completed, the process terminates.

Thus, the user can view the slideshow content in the same way as video content, such as a television program.

The above-mentioned embodiment relates to the case where a music track selected by the user is used as BGM, an effect is applied to only still images (JPEG file), and the still images with the effect are displayed with the BGM track. According to a modification of the above-mentioned embodiment, an effect can also be applied to text and/or numeric characters, which represent attribute information added to a still image upon shooting, and the still image and text with the effect can be displayed together on the same screen.

For example, according to the Exchangeable Image File Format (Exif) standard, various information units regarding, e.g., shooting date and time, exposure time, and flash ON/OFF are added as attribute information units to a JPEG file upon shooting. Texts indicating those information units are automatically sequentially displayed synchronously with still images, so that the user can view the still images while confirming, e.g., the shooting date and time.

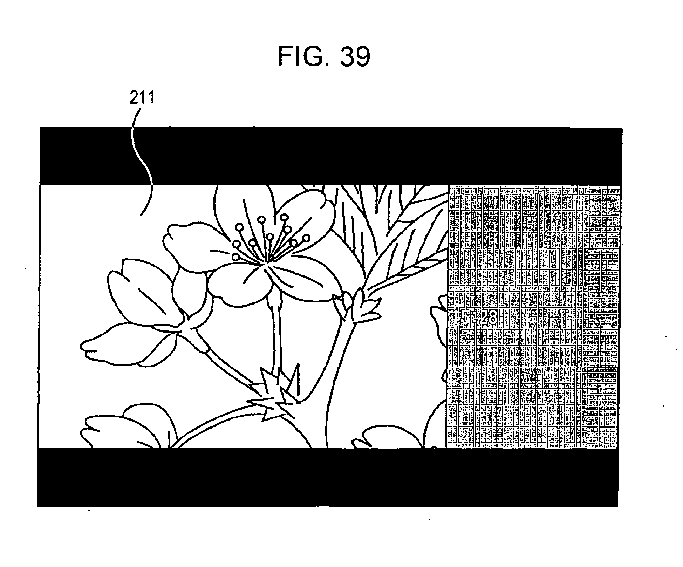

Figs. 39 to 41 show examples of a slideshow screen (i.e., screen for playing back a play list or slideshow content) in which text or numeric characters are displayed simultaneously with a still image as mentioned above.

In the slideshow screen of Fig. 39, a still image 211 with an effect related to the corresponding BGM track is displayed on the left portion of the screen. "15:28", serving as shooting time, included in attribute information regarding the still image 211 is displayed on the right side of the still image 211.

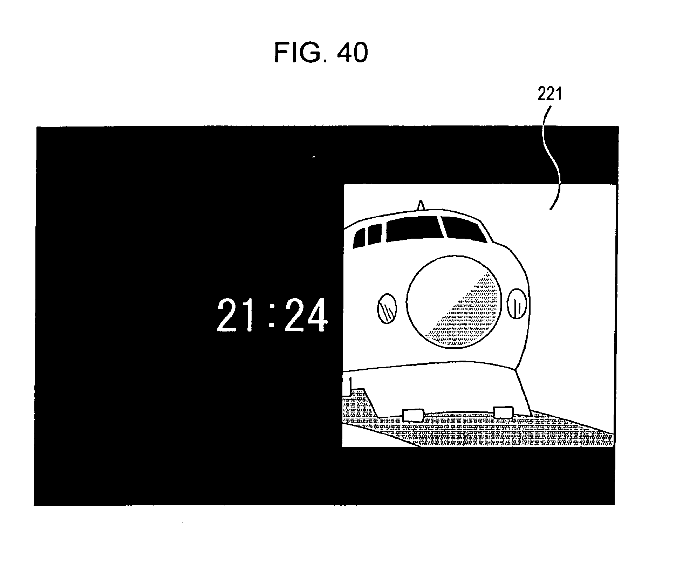

In the slideshow screen of Fig. 40, a still image 221 with an effect related to the corresponding BGM track is displayed on the right portion of the screen. "21:24", serving as shooting time, included in attribute information regarding the still image 221 is displayed on the left side of the still image 221.

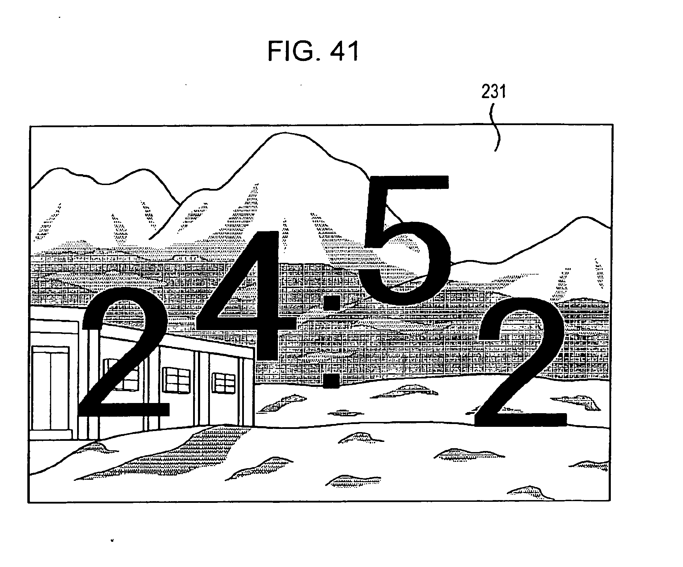

In the slideshow screen of Fig. 41, a still image 231 with an effect related to the corresponding BGM track is displayed on the whole screen. "24:52", serving as shooting time, included in attribute information regarding the still image 231 is displayed over the still image 221.

As shown in Figs. 39 to 41, an effect related to the corresponding BGM track is applied to text and/or numeric characters indicating attribute information so that text and/or numeric characters are displayed in a portion of the screen, they are superimposed on still images displayed on the whole screen, or they are shifted in any direction on the screen.

If text indicating attribute information is simply displayed in a predetermined font, the user can view still images while confirming the details of text. In this case, disadvantageously, the user may feel a sense of incompatibility of the atmosphere of slideshow content for displaying still images with an effect. According to the present invention, as mentioned above, a predetermined effect is applied to text and/or numeric characters indicating attribute information and the text and/or numeric characters with the effect are displayed, thus overcoming the above-mentioned disadvantage.

In the examples in Figs. 39 to 41, attribute information indicating shooting time of a still image is displayed. In addition, an effect can be applied to text and/or numeric characters indicating various attribute information units regarding, e.g., a file name, exposure time, flash ON/OFF, and shutter speed. The text and or numeric characters with the effect can be displayed.

Regarding a file name, in terms of viewing still images as a slideshow with enjoyment, there is no point in displaying file names including serial numbers, e.g., "DSC0001", "DSC0002", "DSC0003", ... which have automatically been assigned to still images by a digital camera upon shooting. Accordingly, the user can purposely set a file name, such as "Sea Photo" or "Travel Photo", instead of the file name automatically set by the digital camera. The set file name can be used as an effect based on attribute information and be displayed together with a still image.

When an effect based on attribute information is displayed over a still image, the effect can be displayed in various ways. First, when a still image is displayed on the screen, an effect based on attribute information is displayed together with the still image. After the lapse of a predetermined time, displaying the effect is stopped and only still images are displayed. Second, a still image is displayed on the screen and, after the lapse of a predetermined time, an effect based on attribute information is displayed until the next still image is displayed. Third, a still image is displayed on the screen and, after the elapse of a predetermined time, an effect based on attribute information is displayed. Further, after the lapse of a predetermined time from displaying the effect, displaying the effect is stopped and only still images are displayed.

Thus, time intervals during which the effect is not displayed over still images are provided. Advantageously, the user can view still images without being interfered by the displayed effect.

Fig. 42 is a block diagram of the structure of the playback unit 34, shown in Fig. 5, for realizing the display on the slideshow screen as shown in Figs. 39 to 41 according to the modification of the embodiment.

The structure of the playback unit 34 in Fig. 42 is the same as that in Fig. 6, except that the playback unit 34 further includes an attribute information analysis unit 241. The same components as those in Fig. 6 are designated by the same reference numerals. An overlapping description is appropriately omitted.

The attribute information analysis unit 241 analyzes attribute information units added to still images to be played back, the still images being selected by the extraction unit 42, and selects at least one attribute information unit to be displayed together with the still images. The attribute information unit selected by the attribute information analysis unit 241 is output to the still image playback unit 43.

As will be described hereinafter, related information is obtained from the HDD 20 or a predetermined server connected via the network on the basis of attribute information added to still images and text and/or numeric characters representing the related information can be displayed as an effect based on the attribute information synchronously with the still images. In this case, the attribute information analysis unit 241 obtains related information based on attribute information added to still images and outputs the related information to the still image playback unit 43.

Play list playback by the information processing apparatus 1 will now be described with reference to a flowchart of Fig. 43. According to this process, text indicating attribute information is displayed synchronously with still images. A case where a saved play list is played back (i.e., a play list selected in the menu screen is played back) will now be described. When a play list which is being created is played back as a preview of the play list, or when slideshow content created based on the played-back play list is played back, the same process is executed.

Steps S131 and S132 in Fig. 43 are the same as steps S111 and S112 in Fig. 37.

When the user selects a play list in the menu screen and instructs to play back the play list, in step S131, the play list analysis unit 41 obtains the play list supplied from the content management unit 31 and analyzes it. The play list analysis unit 41 outputs identification information of the corresponding BGM track to the BGM playback unit 44 and the corresponding template to each of the extraction unit 42 and the still image playback unit 43.

In step S132, the extraction unit 42 thins out still images stored in the corresponding photo album supplied from the content management unit 31 in accordance with playback duration for the BGM track and outputs the extracted still images to each of the still image playback unit 43 and the attribute information analysis unit 241. The still images output from the extraction unit 42 include attribute information units.

In step S133, the attribute information analysis unit 241 analyzes the attribute information units added to the still images supplied from the extraction unit 42 and obtains the attribute information unit regarding shooting time to be displayed synchronously with the still images. In other words, Fig. 43 shows the process of displaying numeric characters representing shooting time synchronously with still images as shown in any of Figs. 39 to 41. The attribute information analysis unit 241 outputs the obtained information regarding shooting time to the still image playback unit 43.

In step S134, the BGM playback unit 44 starts to play back the BGM track. In addition, the still image playback unit 43 applies the corresponding effect, specified by "Effect Type", to the still images supplied from the extraction unit 42 and the numeric characters representing shooting time supplied from the attribute information analysis unit 241 and plays back the still images and shooting time with the effect in the order specified by "Image Display Order" in the template supplied from the play list analysis unit 41. Consequently, the TV 2 displays a slideshow screen as shown in, e.g., any of Figs. 39 to 41.

When information regarding shooting time is added as an attribute information unit to a still image, numeric characters representing the shooting time can be displayed synchronously with the still image. Alternatively, the numeric characters are not necessarily displayed. Whether to display numeric characters representing shooting time is determined based on, e.g., the relationship with design.

In step S135, the still image playback unit 43 determines whether playing back the still images is completed. If the unit 43 determines that the playback is not completed, the process is returned to step S133 and step S133 and the subsequent steps are repeated. In step 135, when the still image playback unit 43 determines that the playback is finished, the process terminates.

The above process is executed when text representing an attribute information unit other than that regarding shooting time is displayed.

A case where text and/or numeric characters indicating related information, which is obtained based on attribute information added to still images, are displayed synchronously with still images will now be described.

As mentioned above, the attribute information analysis unit 241 obtains related information from the HDD 20, serving as an internal storage medium, or from a predetermined server connected via the network. Related information can be obtained from the optical disc 25, serving as a storage medium removable from the information processing apparatus 1.

For example, a digital camera has a positioning function based on the global positioning system (GPS) or the personal handyphone system (PHS) and each still image captured by the digital camera includes attribute information regarding the latitude and the longitude of a shooting site. When a still image, having attribute information regarding the latitude and the longitude of a shooting site, captured by the digital camera is selected to be played back by the extraction unit 42, the attribute information analysis unit 241 obtains a place name of the shooting site from map data stored in the HDD 20 on the basis of the latitude and the longitude and outputs related information regarding the place name of the shooting site to the still image playback unit 43.

Thus, the corresponding effect is applied to the still image and text indicating the place name of the shooting site and the resultant still image and text are displayed in the same screen, serving as a slideshow screen. As mentioned above, related information obtained based on attribute information can be displayed synchronously with still images in the same way as attribute information regarding shooting time.

Information regarding weather in a shooting site is obtained from a predetermined server on the basis of an attribute information unit regarding the latitude and longitude of the shooting site and an attribute information unit regarding shooting date and time. The obtained information can be displayed in addition to the place name of the shooting site. In this case, the attribute information unit regarding the latitude and longitude and that regarding the shooting date and time are transmitted from the attribute information analysis unit 241 (through the communication unit 21) to the server. Then, information regarding weather at date and time specified by the shooting date and time in the site specified by the latitude and longitude is obtained from the server.

Consequently, text and numeric characters indicating shooting date and time, weather, and a place name of a shooting site, e.g., "X Month, X Day, Fair, X Beach", can be displayed synchronously with still images. As mentioned above, an effect related to a BGM track is applied to text and numeric characters indicating obtained related information units and the text and numeric characters with the effect are displayed.

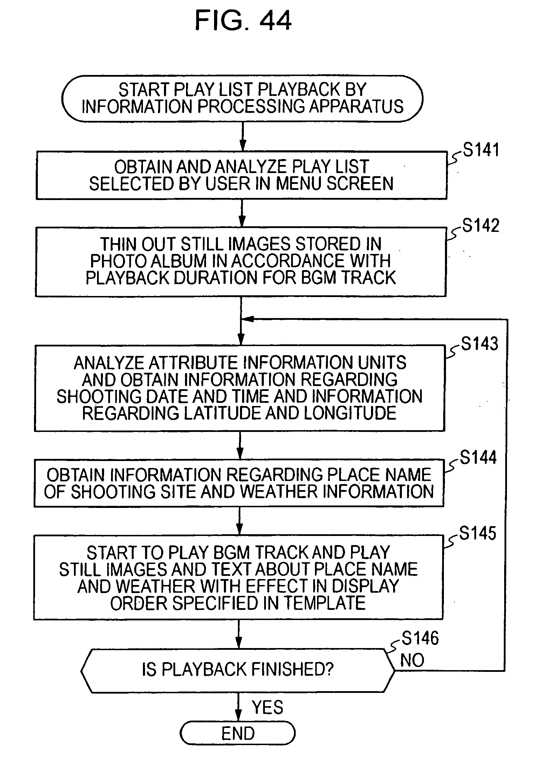

Play list playback will now be described with reference to a flowchart of Fig. 44. This process is executed in order to display text and numeric characters indicating attribute information units and those indicating related information units obtained based on the attribute information units. A case where a stored play list is played back will now be described. The process is also executed when a play list which is being created is played back as a preview, or when slideshow content created on the basis of a played-back play list is played back.

When the user selects a play list in the menu screen and instructs to play back it, in step S141, the play list analysis unit 41 obtains the play list supplied from the content management unit 31 and analyzes the play list. The play list analysis unit 41 outputs identification information of the corresponding BGM track to the BGM playback unit 44 and outputs the corresponding template to the extraction unit 42 and the still image playback unit 43.

In step S142, the extraction unit 42 thins out still images stored in the corresponding photo album supplied from the content management unit 31 in accordance with playback duration for the BGM track and outputs the extracted still images to the still image playback unit 43 and the attribute information analysis unit 241.

In step S143, the attribute information analysis unit 241 analyzes attribute information units added to the still images supplied from the extraction unit 42 and obtains the attribute information unit regarding shooting date and time and that regarding the latitude and longitude of a shooting site. In other words, Fig. 44 shows the process of displaying text and numeric characters representing shooting date and time, text indicating a place name of the shooting site, and text indicating weather at the site in synchronization with the still images, the place name and the weather being obtained based on the attribute information units respectively regarding the shooting date and time and the latitude and longitude.

In step S144, the attribute information analysis unit 241 obtains a related information unit regarding a place name of the shooting site and a related information unit regarding weather on the basis of the attribute information unit regarding the latitude and longitude of the shooting site and that regarding the shooting date and time from the HDD 20 or the optical disc 25, which stores map data (such that a place name is related to the corresponding latitude and longitude), and a server connected via the network. The attribute information analysis unit 241 outputs the obtained related information units together with the attribute information unit regarding the shooting date and time to the still image playback unit 43.

In step S145, the BGM playback unit 44 starts to play back the BGM track. The still image playback unit 43 applies an effect, specified by "Effect Type" in the template supplied from the play list analysis unit 41, to the still images supplied from the extraction unit 42 and text (indicating shooting date and time, weather, and the place name of the shooting site) representing the attribute information units supplied from the attribute information analysis unit 241 and plays back the resultant still images and text in the order specified by "Image Display Order" in the template. Thus, text, e.g., "X Month, X Day, Fair, X Beach", is displayed synchronously with the still images on the TV 2.

In step S146, the still image playback unit 43 determines whether playing back the still images is finished. If the unit 43 determines that the playback is not finished, the process is returned to step S143 and step S143 and the subsequent steps are repeated. In step S146, when the still image playback unit 43 determines that the playback is finished, the process terminates.

As mentioned above, an effect related to the corresponding BGM track is applied to still images and various text and numeric characters and the resultant still images, text, and numeric characters with the effect can be displayed.

In addition to text and numeric characters indicating attribute information units regarding an still image, an effect can also be applied to text indicating the title of a music track played back as BGM and/or the corresponding artist name and the resultant text can be displayed. Instead of applying an effect to text or numeric characters indicating attribute information, the description of attribute information can affect a method for applying an effect.

In the above embodiment, music tracks used as BGM are previously stored in the information processing apparatus 1. In addition, a music track which the user imports from a music CD to the information processing apparatus 1 may be selectable as BGM.

When a music track is imported from a music CD to the information processing apparatus 1, attribute information units respectively regarding the tempo and genre of the imported music track are also transmitted from the music CD or a predetermined server connected through the network to the information processing apparatus 1. The feeling of the music track is determined on the basis of the attribute information units and a template is related to the music track such that an effect included in the template matches the feeling of the imported music track. Relating a music track to the corresponding template is performed based on, e.g., attribute information of the music track and information regarding "Feeling" in the template shown in Fig. 3.

Consequently, the user can select a music track imported into the information processing apparatus 1 as BGM. In addition, since each imported music track is automatically related to a template, the user can select a music track used as BGM, thus selecting a template.

Regarding templates to be related to respective music tracks, in addition to the templates stored in the information processing apparatus 1, a template downloaded from a server connected via the network can be used and a template imported from the optical disc 25 can also be used.

According to the above embodiment, one music track as BGM is related to one effect (template). One effect related to one music track selected as BGM is applied to still images and the still images with the effect are played back. In addition, one music track as BGM can be related to a plurality of effects which match the feeling of the music track. In this case, e.g., after selecting a music track as BGM, the user can select favorite effects.

The above-mentioned series of processes can be executed by hardware. The processes may alternatively be implemented by software.

When the series of processes are implemented by software, a program constituting the software is installed from a network or a recording medium on a computer incorporated in dedicated hardware or a general-purpose personal computer which can execute various functions by installing various programs thereon.

The recording medium includes a memory card, such as the memory card 23 in Fig. 4, or an optical disc, such as the optical disc 25, in which the program has been recorded and which is distributed in order to provide the program to a user separately from an apparatus. The recording medium also includes a hard disk, such as the ROM 12 or the HDD 20, in which the program has been recorded and which is incorporated in an apparatus and is then delivered to the user.

In this specification, steps may be performed in time series in the described order, or may be performed in parallel or individually.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus (1) comprising:
determining means (41, 42) for determining at least one still image to be displayed, a piece of music to be used as back ground music and at least one effect to be applied to said at least one still image;
selection means (241) for analyzing (S143, S133) attribute information units, which are added upon shooting to said at least one still image, and selecting a predetermined attribute information unit; and
playback means (43) for playing back said piece of music and displaying said at least one still image and applying said at least one effect,
**characterized in that**
said determining means (41, 42) is adapted to obtain (S62) identification information regarding said piece of music to be used as back ground music and to determine, based on said identification information, said at least one effect related to characteristics of said piece of music;
the selection means (241) is adapted to acquire (S144), on the basis of the attribute information units, weather conditions at location and time of the shooting of said at least one still image from a predetermined server connected via a network, an internal storage medium, or a removable storage medium; and
said playback means (43) is adapted to display said at least one still image together with text indicating the weather conditions acquired by said selection means (241) on the same screen and to apply said at least one effect to said at least one still image and said text.

2. The apparatus according to Claim 1, wherein
said selection means (241) is adapted to select (S144), from the attribute information units, information indicating shooting date and/or shooting time.

3. The apparatus according to Claim 2, wherein,
said playback means (43) is adapted to apply said at least one effect to said at least one still image, said text and said shooting date and/or shooting time that are displayed on the same screen.

4. The apparatus according to anyone of Claims 1 to 3, further comprising
means for selecting a plurality of still images to be displayed and said piece of music to be used as back ground music by a user; wherein
said determining means (41, 42) is adapted to adjust (S72) the number of still images to be displayed from said plurality of still images so that successive display of still images and the play back of said piece of music are finished simultaneously; and
said playback means (43) is adapted to display said still images while playing back said piece of music.

5. An information processing method comprising the steps of:
determining (41, 42) at least one still image to be displayed, a piece of music to be used as back ground music and at least one effect to be applied to said at least one still image;
analyzing (S143, S133) attribute information units, which are added upon shooting to said at least one still image, and selecting a predetermined attribute information unit; and
playing back (43) said piece of music and displaying said at least one still image by applying said at least one effect,
**characterized in that**
in said determining step (41, 42), identification information regarding said piece of music to be used as back ground music is obtained (S62) and, based on said identification information, said at least one effect related to characteristics of said piece of music is determined;
in said analyzing step (S143, S133), on the basis of the attribute information units, weather conditions at location and time of the shooting of said at least one still image are acquired from a predetermined server connected via a network, an internal storage medium, or a removable storage medium; and
in said playback step (43), said at least one still image is displayed together with text indicating the weather conditions on the same screen and said at least one effect is applied to said at least one still image and said text.

6. The information processing method according to Claim 5, wherein
in said analyzing step (S143, S133), information indicating shooting date and/or shooting time is selected (S144) from the attribute information units.

7. The information processing method according to Claim 6, wherein
in said playback step (43), said at least one effect is applied to said at least one still image, said text and said shooting date and/or shooting time that are displayed on the same screen.

8. The information processing method according to anyone of Claims 5 to 8, further comprising step of
selecting, by a user, a plurality of still images to be displayed and said piece of music to be used as back ground music; wherein
in said determining step (41, 42), the number of still images to be displayed from said plurality of still images is adjusted (S72) so that successive display of still images and the play back of said piece of music are finished simultaneously; and
in said playback step (43), said still images are displayed while playing back said piece of music.

9. A computer program product comprising program code means adapted to perform all steps of the method of anyone claims 5 to 8 when said program is run on a computer.

## Patentansprüche

1. Informationsverarbeitungsvorrichtung (1) mit einer Bestimmungseinrichtung (41, 42) zum Bestimmen zumindest eines anzuzeigenden Standbildes, eines als Hintergrundmusik zu verwendenden Musikstücks und zumindest eines bei dem zumindest einen Standbild anzuwendenden Effekts,
mit einer Auswahleinrichtung (241) zum Analysieren (S 143, S133) von Attribut-Informationseinheiten, die auf eine Aufnahme hin dem zumindest einen Standbild hinzugefügt werden, und zum Auswählen einer bestimmten Attribut-Informationseinheit
und mit einer Wiedergabeeinrichtung (43) zum Wiedergeben des Musikstücks, zum Anzeigen des zumindest einen Standbildes und zum Anwenden des zumindest einen Effekts,
**dadurch gekennzeichnet,**
**dass** die Bestimmungseinrichtung (41, 42) dazu geeignet ist, eine Identifizierungsinformation bezüglich des als Hintergrundmusik zu verwendenden Musikstücks zu erhalten (S62) und auf der Grundlage der Identifizierungsinformation den zumindest einen Effekt bezüglich der Charakteristika des Musikstücks zu bestimmen,
**dass** die Auswahleinrichtung (241) dazu geeignet ist, auf der Grundlage der Attribut-Informationseinheiten Wetterbedingungen am Ort und zur Zeit der Aufnahme des zumindest einen Standbildes von einem über ein Netzwerk angeschlossenen bestimmten Server, einem internen Speichermedium oder einem auswechselbaren Speichermedium zu erlangen (S144),
und **dass** die Wiedergabeeinrichtung (43) dazu geeignet ist, das zumindest eine Standbild zusammen mit einem die durch die Auswahleinrichtung (241) erlangten Wetterbedingungen angebenden Text auf demselben Bildschirm anzuzeigen und den zumindest einen Effekt bei dem zumindest einen Standbild und dem Text anzuwenden.

2. Vorrichtung nach Anspruch 1, wobei die Auswahleinrichtung (241) dazu geeignet ist, aus den Attribut-Informationseinheiten eine Information auszuwählen (S144), die das Aufnahmedatum und/oder die Aufnahmezeit angibt.

3. Vorrichtung nach Anspruch 2, wobei die Wiedergabeeinrichtung (43) dazu geeignet ist, den zumindest einen Effekt bei dem zumindest einen Standbild, dem Text und dem Aufnahmedatum und/oder dem Aufnahmezeitpunkt anzuwenden, die auf demselben Bildschirm angezeigt werden.

4. Vorrichtung nach einem der Ansprüche 1 bis 3, ferner umfassend eine Einrichtung zum Auswählen einer Mehrzahl von anzuzeigenden Standbildern und des als Hintergrundmusik zu verwendenden Musikstücks durch einen Benutzer,
wobei die Bestimmungseinrichtung (41, 42) dazu geeignet ist, die Anzahl der anzuzeigenden Standbilder aus der Mehrzahl der Standbilder derart festzulegen (S72), dass eine aufeinanderfolgende Anzeige von Standbildern und die Wiedergabe des Musikstücks gleichzeitig beendet werden,
und wobei die Wiedergabeeinrichtung (43) dazu geeignet ist, die Standbilder während der Wiedergabe des Musikstücks anzuzeigen.

5. Informationsverarbeitungsverfahren, umfassend die Schritte:
Bestimmen (41, 42) zumindest eines anzuzeigenden Standbildes, eines als Hintergrundmusik zu verwendenden Musikstücks und zumindest eines bei dem zumindest einen Standbild anzuwendenden Effekts,
Analysieren (S143, S133) von Attribut-Informationseinheiten, die auf eine Aufnahme hin dem zumindest einen Standbild hinzugefügt werden, und Auswählen einer bestimmten Attribut-Informationseinheit
und Wiedergeben (43) des Musikstücks und Anzeigen des zumindest einen Standbildes durch Anwenden des zumindest einen Effekts,
**dadurch gekennzeichnet,**
**dass** bei dem Bestimmungsschritt (41, 42) eine Identifizierungsinformation bezüglich des als Hintergrundmusik zu verwendenden Musikstücks erhalten (S62) wird,
**dass** auf der Grundlage der Identifizierungsinformation der zumindest eine Effekt bezüglich der Charakteristika des Musikstücks bestimmt wird,
**dass** bei dem Analysierschritt (S 143, S 133) auf der Grundlage der Attribut-Informationseinheiten Wetterbedingungen am Ort und zur Zeit der Aufnahme des zumindest einen Standbildes von einem über ein Netzwerk angeschlossenen bestimmten Server, einem internen Speichermedium oder einem auswechselbaren Speichermedium erlangt werden
und **dass** bei dem Wiedergabeschritt (43) das zumindest eine Standbild zusammen mit einem die Wetterbedingungen angebenden Text auf demselben Bildschirm angezeigt und der zumindest eine Effekt bei dem zumindest einen Standbild und dem Text angewandt werden.

6. Informationsverarbeitungsverfahren nach Anspruch 5, wobei bei dem Analysierschritt (S143, S133) eine das Aufnahmedatum und/oder die Aufnahmezeit angebende Information aus den Attribut-Informationseinheiten ausgewählt (S 144) wird.

7. Informationsverarbeitungsverfahren nach Anspruch 6, wobei bei dem Wiedergabeschritt (43) der zumindest eine Effekt bei dem zumindest einen Standbild, dem Text und dem Aufnahmedatum und/oder dem Aufnahmezeitpunkt angewandt wird, die auf demselben Bildschirm angezeigt werden.

8. Informationsverarbeitungsverfahren nach einem der Ansprüche 5 bis 7, ferner umfassend den Schritt des Auswählens einer Mehrzahl von anzuzeigenden Standbildern und des als Hintergrundmusik verwendenden Musikstücks durch einen Benutzer,
wobei bei dem Bestimmungsschritt (41, 42) die Anzahl von anzuzeigenden Standbildern aus der Mehrzahl von Standbildern derart festgelegt (S72) wird, dass eine aufeinanderfolgende Anzeige von Standbildern und die Wiedergabe des Musikstücks gleichzeitig beendet werden,
und wobei bei dem Wiedergabeschritt (43) die Standbilder angezeigt werden, während das Musikstück wiedergegeben wird.

9. Computerprogrammprodukt mit Programmcodemitteln, die dazu geeignet sind, sämtliche Schritte des Verfahrens nach einem der Ansprüche 5 bis 8 auszuführen, wenn das Programm auf einem Computer abläuft.

## Revendications

1. Appareil (1) de traitement d'informations comprenant :
un moyen (41, 42) de détermination, destiné à déterminer au moins une image fixe à afficher, un morceau de musique à utiliser en tant que musique d'ambiance et au moins un effet à appliquer à ladite au moins une image fixe ;
un moyen (241) de sélection, destiné à analyser (S143, S133) des unités d'informations d'attributs qui sont ajoutées lors de la prise de ladite au moins une image fixe, et à sélectionner une unité d'informations d'attributs prédéterminée ; et
un moyen (43) de lecture, destiné à reproduire ledit morceau de musique et à afficher ladite au moins une image fixe, ainsi qu'à appliquer ledit au moins un effet,
**caractérisé en ce que** :
ledit moyen (41, 42) de détermination est conçu pour obtenir (S62) des informations d'identification concernant ledit morceau de musique à utiliser en tant que musique d'ambiance et pour déterminer, sur la base desdites informations d'identification, ledit au moins un effet se rapportant à des caractéristiques dudit morceau de musique ;
le moyen (241) de sélection est conçu pour acquérir (S144), sur la base des unités d'informations d'attributs, des conditions météorologiques au lieu et au moment de la prise de ladite au moins une image fixe, à partir d'un serveur prédéterminé, connecté via un réseau, un support d'enregistrement interne ou un support d'enregistrement amovible ; et
ledit moyen (43) de lecture est conçu pour afficher ladite au moins une image fixe, conjointement à du texte indiquant les conditions météorologiques acquises par ledit moyen (241) de sélection, sur le même écran et pour appliquer ledit au moins un effet à ladite au moins une image fixe et audit texte.

2. Appareil selon la revendication 1, dans lequel :
ledit moyen (241) de sélection est conçu pour sélectionner (S144), à partir des unités d'informations d'attributs, des informations indiquant la date de prise de vue et/ou l'heure de prise de vue.

3. Appareil selon la revendication 2, dans lequel :
ledit moyen (43) de lecture est conçu pour appliquer ledit au moins un effet à ladite au moins une image fixe, audit texte, ainsi qu'à ladite date de prise de vue et/ou à ladite heure de prise de vue, qui sont affichés sur le même écran.

4. Appareil selon l'une quelconque des revendications 1 à 3, comprenant, en outre :
un moyen destiné à sélectionner une pluralité d'images fixes à afficher et ledit morceau de musique à utiliser en tant que musique d'ambiance par un utilisateur ; dans lequel :
ledit moyen (41, 42) de détermination est conçu pour régler (S72) le nombre d'images fixes à afficher à partir de ladite pluralité d'images fixes, de manière à ce qu'un affichage successif d'images fixes et la reproduction dudit morceau de musique se terminent simultanément ; et
ledit moyen (43) de lecture est conçu pour afficher lesdites images fixes, tout en reproduisant ledit morceau de musique.

5. Procédé de traitement d'informations, comprenant les étapes consistant à :
déterminer (41, 42) au moins une image fixe à afficher, un morceau de musique à utiliser en tant que musique d'ambiance et au moins un effet à appliquer à ladite au moins une image fixe ;
analyser (S143, S133) des unités d'informations d'attributs qui sont ajoutées, lors de la prise de vue, à ladite au moins une image fixe, et sélectionner une unité d'informations d'attributs prédéterminée ; et
reproduire (43) ledit morceau de musique et afficher ladite au moins une image fixe, en appliquant ledit au moins un effet,
**caractérisé en ce que** :
à ladite étape de détermination (41, 42), des informations d'identification concernant ledit morceau de musique à utiliser en tant que musique d'ambiance, sont obtenues (S62) et, sur la base desdites informations d'identification, ledit au moins un effet se rapportant à des caractéristiques dudit morceau de musique est déterminé ;
à ladite étape d'analyse (S143, S133), sur la base des unités d'informations d'attributs, des conditions météorologiques au lieu et au moment de la prise de ladite au moins une image fixe, sont acquises à partir d'un serveur prédéterminé, connecté via un réseau, un support d'enregistrement interne ou un support d'enregistrement amovible, et
à ladite étape de lecture (43), ladite au moins une image fixe est affichée conjointement à du texte indiquant les conditions météorologiques, sur le même écran, et ledit au moins un effet est appliqué à ladite au moins une image fixe et audit texte.

6. Procédé de traitement d'informations, selon la revendication 5, dans lequel :
à ladite étape d'analyse (S143, S133), des informations indiquant la date de prise de vue et/ou l'heure de prise de vue, sont sélectionnées (S144) à partir des unités d'informations d'attributs.

7. Procédé de traitement d'informations, selon la revendication 6, dans lequel :
à ladite étape de lecture (43), ledit au moins un effet est appliqué à ladite au moins une image fixe, audit texte, ainsi qu'à ladite date de prise de vue et/ou heure de prise de vue, qui sont affichés sur le même écran.

8. Procédé de traitement d'informations, selon l'une quelconque des revendications 5 à 8, comprenant, en outre, l'étape consistant à :
sélectionner, par un utilisateur, une pluralité d'images fixes à afficher et ledit morceau de musique à utiliser en tant que musique d'ambiance ; dans lequel :
à ladite étape de détermination (41, 42), le nombre d'images fixes à afficher à partir de ladite pluralité d'images fixes, est réglé (S72), de manière à ce qu'un affichage successif d'images fixes et la reproduction dudit morceau de musique se terminent simultanément ; et
à ladite étape de lecture (43), lesdites images fixes sont affichées tandis que ledit morceau de musique est reproduit.

9. Produit-programme informatique comprenant des moyens de code de programme conçus pour exécuter toutes les étapes du procédé selon l'une quelconque des revendications 5 à 8, lorsque ledit programme est exécuté sur un ordinateur.
